# EUROPEAN PATENT APPLICATION

(11) **EP 2 182 692 A1**
(43) Date of publication of application: **05.05.2010**
(21) Application number: 08784034.4
(22) Date of filing: 19.08.2008
(51) Int. Cl.: H04L 29/06, H04W 4/00

(54) **A METHOD, DEVICE AND SYSTEM FOR PROCESSING THE CONTINUITY OF THE MEDIA STREAM IN A SESSION**

(30) Priority: 20.08.2007 CN 200710138776
(71) Applicant: Huawei Technologies Co., Ltd., Shenzhen, Guangdong 518129 (CN)
(72) Inventor: ZHANG, Zhaohui, Shenzhen Guangdong 518129 (CN); ZHU, Dongming, Shenzhen Guangdong 518129 (CN); XIE, Xiaoqiang, Shenzhen Guangdong 518129 (CN)
(74) Representative: Barth, Stephan Manuel
(86) International application number: PCT/CN2008/072043
(87) International publication number: WO 2009/024081

(57) **Abstract**

A method, apparatus, and system for processing continuity of media streams in a session are disclosed herein to fulfill the requirements for processing continuity of media streams in a session. The method includes the following steps: an SAF between a set of first access connections and a remote connection corresponding to a HandOver Remote Function (HORF) is provided, where each first access connection corresponds to a HandOver Source Function (HOSF) in an HOSF set in a session and is associated with a target media stream; the SAF associates a media component corresponding to the target media stream with a second access connection between the SAF and each HandOver Destination Function (HODF) in an HODF set after receiving a stream operation request; the SAF performs a stream operation on the second access connection and processes continuity of the target media stream.

## Description

### Field of the Invention

The present invention relates to the communication field, and in particular, to a method, apparatus, and system for processing continuity of media streams in a session.

### Background of the Invention

### I. Voice Call Continuity

Voice Call Continuity (VCC) is a service provided by a home IP Multimedia Subsystem (IMS) network of a user. VCC enables bidirectional transfer of the user's voice call between the Circuit Switched (CS) domain and the IMS network. The integrated IMS architecture enables seamless voice call services in a CS domain and an IP-Connectivity Access Network (IP-CAN).

When a VCC User Equipment (UE) is in an active voice session, call continuity can be implemented through a domain transfer process. For the purpose of domain transfer, all the calls originated or received by the VCC user need to be anchored to the Domain Transfer Function (DTF) of the home IMS network of the user. The DTF is an application server equivalent to a Back-to-Back-User-Agent (B2BUA). In VCC, the session control leg between the DTF and the VCC UE is an access leg, and the session control leg between the DTF and the remote user is a remote leg. Transfer is an operation of substituting the new access leg (the second access leg) in the destination network (namely, the transferred-in network) for the old access leg (the first access leg) in the source network (namely, the transferred-out network) connected to the remote leg. When the remote UE supports the IMS, the bearer connection is replaced from end to end. When the remote UE supports the CS/Public Switched Telephone Network (CS/PSTN), the bearer connection is replaced between the VCC UE and the Media Gateway (MGW). After the new access leg is established completely, the VCC UE transfers the media input and output channel from the source domain to the destination domain.

When the VCC UE of the user detects radio signals and determines that it is necessary to perform transfer from the source network to the destination network, the VCC UE originates a call to a special number (establishes a second access leg, namely, establishes a new session between the DTF and the VCC UE in the destination network). Through this number, the call request is sent to the DTF. The DTF determines that the request is a domain transfer request. According to the media information supported by the VCC UE in the new call, the DTF re-negotiates the media with the original remote UEs, so that the media streams on the remote leg are redirected to the second access leg (namely, the remote leg is updated and then acts as a substitute for the access leg). After the media negotiation is completed and the new call is established, the DTF or the VCC UE releases the call in the source network (releases the first access leg, namely, the session between the old DTF and the VCC UE in the source network). In this way, the new access leg replaces the old access leg, and the user's voice call is transferred to the destination network. During the transfer, the user's voice call keeps uninterrupted, thus improving the user experience.

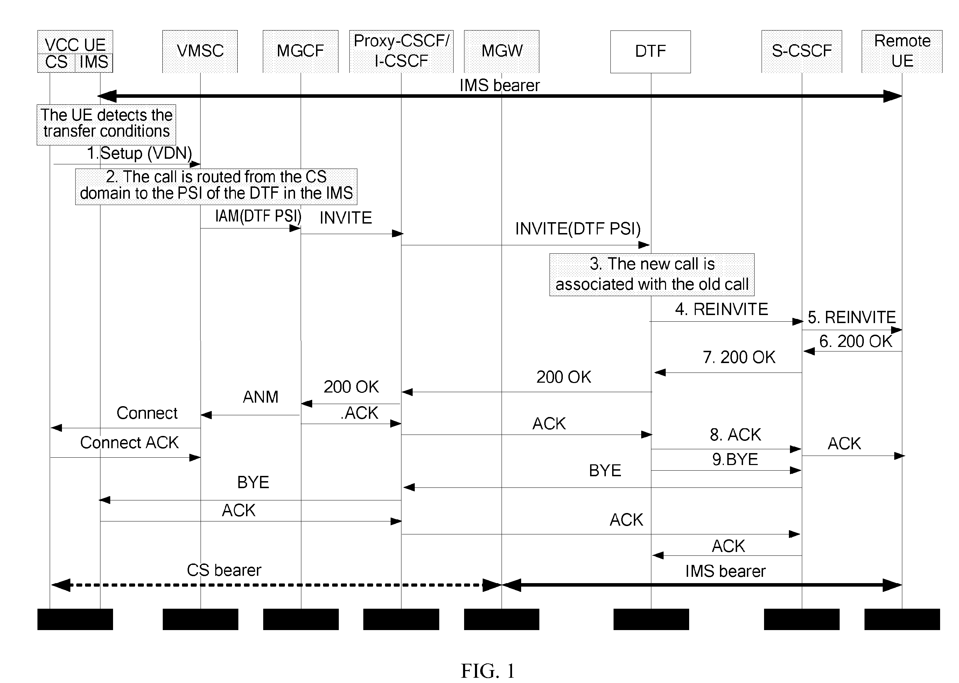

FIG. 1 shows a process of call transfer from the IMS to the CS domain in VCC. The process includes the following steps (non-essential steps are omitted; some entities of the remote UE are omitted):
1: According to the radio environment, the VCC UE determines that the call needs to be transferred to the CS domain, and originates a call to a special number (VDN) in the CS domain to initiate domain transfer.
2: According to the Customized Applications for Mobile Network Enhanced Logic (CAMEL) service process, the Visited Mobile Switching Center (VMSC) redirects the call to a Public Service Identifier (PSI) of the DTF in the IMS network. Therefore, the call can be routed to the DTF of the home IMS network of the VCC user.
3: The DTF determines the destination domain information in the domain transfer request according to the number in the INVITE message, and locates the anchored session according to the calling party information.
4-8: The DTF re-negotiates the media of the remote leg (from the DTF to the remote UE) for the user and the remote user by using the media information in the domain transfer request.
9: After the session of the destination network is established, the DTF releases the access part of call resources in the IMS domain (it is assumed that the DTF in the network initiates the release here, but the release may also be initiated by the VCC UE).

### II. Multimedia Session Continuity

In the 3rd Generation Partnership Project (3GPP), the provision of an application scenario of Multimedia Session Continuity (MMSC) is initially discussed. MMSC deals with the transfer of a multimedia call between networks based on different access technologies, and transfers some media components in a session to several destination UEs or transfers them in the reverse direction under the control of a user.

In the process of implementing the present invention, the inventor finds that: as regards processing of continuity of media streams (namely, media stream components), the prior art provides only an application scenario, but provides no implementation solution.

### Summary of the Invention

Embodiments of the present invention provide a method, apparatus, and system for processing continuity of media streams in a session.

A method for processing continuity of media streams in a session according to according to an embodiment of the present invention includes:
providing a session control Signaling-plane Anchoring Function (SAF) between a set of first access connections and a remote connection corresponding to a HandOver Remote Function (HORF), where each first access connection corresponds to a HandOver Source Function (HOSF) in an HOSF set in a session and is associated with a target media stream; and
by the SAF, associating a media component corresponding to the target media stream with a second access connection between the SAF and each HandOver Destination Function (HODF) in an HODF set after the SAF receives a stream operation request, and performing stream operations on the second access connection and processing continuity of the target media stream.

An SAF according to an embodiment of the present invention includes:
a triggering unit, configured to trigger the SAF after receiving a request for providing the SAF between a set of first access connections and a remote connection corresponding to an HORF, where each first access connection corresponds to an HOSF in an HOSF set in a session and is associated with a target media stream;
a receiving unit, configured to receive a stream operation request after the SAF is triggered;
an associating unit, configured to associate a media component corresponding to the target media stream with a second access connection between the SAF and each HODF in an HODF set after receiving the stream operation request; and
a media stream processing unit, configured to: perform stream operations on the second access connection and process continuity of the target media stream.

A system for processing continuity of media streams in a session according to an embodiment of the present invention includes: an HOSF set, an HODF set, an HORF, and an SAF.

A method for copying a media stream according to an embodiment of the present invention includes:
by a Bearer Anchoring Function Control plane (BAF-C), working with an SAF to add a Bearer Anchoring Function User plane (BAF-U) to a user data bearer connection of a session between an HODF set and an HORF;
receiving, by the BAF-C, an indication of copying a target media stream from an HOSF set to the HODF set; and
requesting, by the BAF-C, conference resources on the BAF-U, connecting media bearers of all parties in the media interaction to the conference resources, and modifying a direction of transmitting media streams between the HODF set and the BAF-U to copy the destination media stream.

A system for copying a media stream according to an embodiment of the present invention includes: an SAF, an HOSF set, an HODF set, an HORF, a BAF-C, and a BAF-U.

The SAF works with the BAF-C, and is configured to add the BAF-U to a user data bearer connection of a session between the HODF set and the HORF.

The SAF is configured to instruct the BAF-C to copy a target media stream from the HOSF set to the HODF set.

The BAF-C is configured to request conference resources on the BAF-U after receiving a copying indication, connect media bearers of all parties in the media interaction to the conference resources, and modify a direction of transmitting media streams between the HODF set and the BAF-U to copy the target media stream.

Through the method for processing continuity of media streams in a session, the SAF, and the system for processing continuity of media streams in a session according to the embodiments of the present invention, the continuity of media streams in a session is processed properly.

### Brief Description of the Drawings

FIG. 1 is a flowchart of call transfer from an IMS to a CS domain in VCC in the prior art;
FIG. 2 is a flowchart of processing media streams in a session according to an embodiment of the present invention;
FIG. 3 shows an SAF structure according to an embodiment of the present invention;
FIG. 4 shows a UE structure according to an embodiment of the present invention;
FIG. 5 is a flowchart of copying media streams according to an embodiment of the present invention;
FIG. 6 shows a system architecture according to embodiment 1.1 of the present invention;
FIG. 7 shows a system architecture according to embodiment 1.2 of the present invention;
FIG. 8 shows a system architecture according to embodiment 1.3 of the present invention;
FIG. 9 shows a system architecture according to embodiment 1.4 of the present invention;
FIG. 10 is a flowchart of embodiment 2.1 of the present invention;
FIG. 11 is a flowchart of embodiment 2.2 of the present invention;
FIG. 12 is a flowchart of embodiment 2.3 of the present invention;
FIG. 13 is a flowchart of embodiment 2.4 of the present invention;
FIG. 14 is a flowchart of embodiment 2.5 of the present invention;
FIG. 15 is a flowchart of embodiment 3.1 of the present invention;
FIG. 16 is a flowchart of embodiment 3.2 of the present invention;
FIG. 17 is a flowchart of embodiment 4 of the present invention;
FIG. 18 is a flowchart of embodiment 5 of the present invention;
FIG. 19 is a flowchart of embodiment 6 of the present invention;
FIG. 20 is a flowchart of embodiment 7 of the present invention; and
FIG. 21 is a flowchart of embodiment 8 of the present invention.

### Detailed Description of the Embodiments

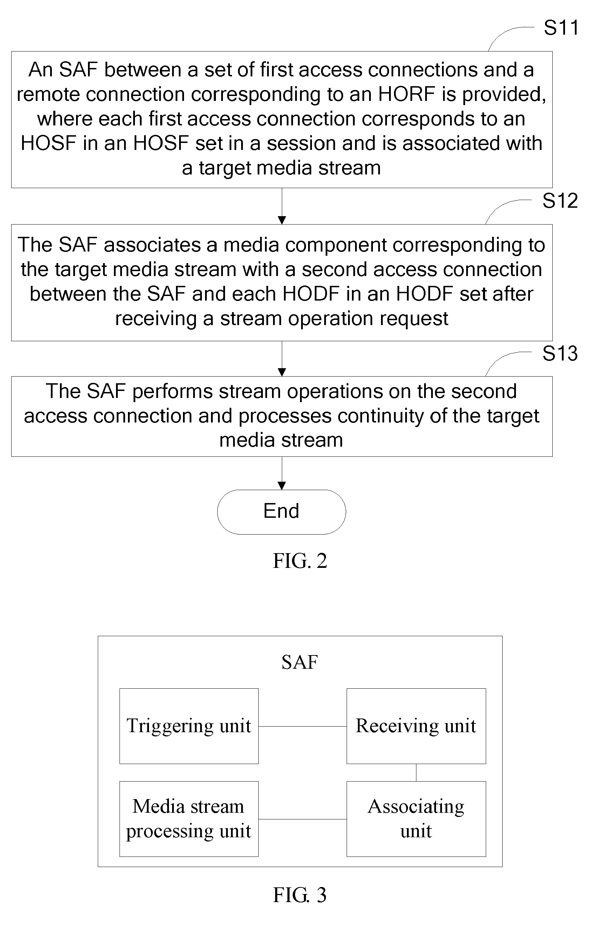

The embodiments of the present invention aim to fulfilling the requirements for processing continuity of media streams in a session.
I. A method for processing media streams in a session is provided in an embodiment of the present invention. As shown in FIG. 2, the method includes:
   S11: An SAF between a set of first access connections and a remote connection corresponding to an HORF is provided, where each first access connection corresponds to an HOSF in an HOSF set in a session and is associated with at least one target media stream.
   S12: The SAF associates a media component corresponding to the target media stream with a second access connection between the SAF and each HODF in an HODF set after receiving a stream operation request.
   S13: The SAP performs stream operations on the second access connection and processes continuity of the target media stream.

   (1) Step S11 includes the following contents:
      The SAF corresponds to an Application Server (AS) in a home IMS network of the HOSF.
      The first access connection refers to the session control signaling connection between the HOSF and the SAF. That is, the first access connection corresponding to the HOSF may be associated with different media components. As long as the media component associated with a connection needs continuity processing, the connection is called the first access connection.
      The HOSF set includes at least one HOSF. The corresponding first access connection set includes at least one first access connection. The first access connection is associated with and controls at least one media component. One HOSF corresponds to at least one first access connection, and belongs to only one source UE. One source UE may correspond to at least one HOSF.
      The remote connection refers to the session control connection between the HORF and the SAF. Through the first access connection set and the second access connection set and the corresponding remote connection control, media streams are transmitted between the HOSF/HODF set and the HORF.
   (2) Step S12 includes the following contents:
      (2.1) The stream operation request received by the SAF includes but is not limited to a stream operation request in the following scenarios:
         Scenario 1: a stream operation request received by the SAF from an HOSF, requesting to transfer or copy the target media stream, which is associated with the first access connection corresponding to every HOSF in the HOSF set, to an HODF set.
            At least one of the following conditions triggers the HOSF to send a stream operation request:
            (a) The HOSF receives a user indication (in the case of transfer or copying);
            (b) The HOSF detects that the strength of the radio signal meets the preset threshold (in the case of transfer);
            (c) The HOSF detects that the Quality of Service (QoS) of the media meets the preset threshold (in the case of transfer);
            (d) The HOSF detects a UE which is more appropriate for processing the media (in the case of transfer); and
            (e) The HOSF detects that the current time meets the preset value. For example, the preset value is met upon arrival of a preset time (in the case of transfer or copying).

            The HOSF may obtain the information in the stream operation request from the session information stored by the HOSF or from the user input. The stream operation request includes at least one of the following items:
            (a) a stream operation indication: indicates a media stream transfer or copying operation and further indicates transfer or copying of the media stream on the HOSF to the HODF;
            (b) an identifier of the target media stream's component: designed for the SAF to locate the component of the target media stream associated with the anchored first access connection; and
            (c) a destination indication: includes a user identifier, a UE identifier, or an identifier of the next access mode of the UE.

            The stream operation request is routed to the SAF in any of the following modes:
            (a) If the HOSF sends a stream operation request on the first access connection, the SAF (which serves as a signaling anchor) receives the stream operation request from the connection, for example, uses a Refer message on the first access connection; or
            (b) If the HOSF uses a message outside the first access connection and sends a Refer message that carries an address routable to the SAF outside the first access connection (for example, a PSI of the AS where the SAF is located), the stream operation request is routed to the SAF according to the SAF address; or
            (c) The HOSF sends a stream operation request (such as a Refer message that carries the information required for transfer) to the HODF, and the HODF sends the stream operation request to the SAF. The stream operation request is routed to the SAF (the mode of routing the request from the HODF to the SAF is described in the part about the HODF); or
            (d) The HOSF sends a Refer message outside the first access connection. The Refer message carries the information. Through initial Filter Criteria (iFC), the stream operation request is triggered to the SAF; or
            (e) If the source network of the HOSF is a Circuit Switched (CS) network, the HOSF uses a CS signaling message outside the call to send a stream operation request to the CS agent entity. The agent entity converts the request, and transmits the request to the SAF through the session of the first access connection. The stream operation request carries the identifier information associated with the first access connection so that the CS agent entity can locate the first access connection. The signaling message outside the CS session may be an Unstructured Service Data (USSD) message or a Short Message Service (SMS) message, and this request further carries the identifier information that may be associated with the first access connection so that the CS agent entity can locate the first access connection. The CS agent entity may be combined with the SAF.
         Scenario 2: a stream operation request received by the SAF from an HODF, requesting to transfer or copy the target media stream, which is associated with the first access connection corresponding to every HOSF in the HOSF set, to an HODF set.
            At least one of the following conditions triggers the HODF to send a stream operation request:
            (a) A user indication is received (in the case of transfer or copying);
            (b) The HODF detects that the strength of the radio signal meets a preset threshold (in the case of transfer);
            (c) The HODF detects that the current time meets a preset value (in the case of transfer or copying); and
            (d) The HODF receives a stream operation indication sent by the HOSF or a third-party entity (in the case of transfer or copying). The third-party entity, including the third-party UE and the HandOver Control Function (HOCF) at the network side, is neither the remote end nor the destination end..

            The stream operation request carries at least one of the following items:
            (a) a stream operation indication: indicates a media stream transfer or copying operation and further indicates obtaining of the media stream from the HOSF or copying of the media stream to the HODF;
            (b) an identifier of the target media stream's component: designed for the SAF to locate the component of the target media stream associated with the anchored first access connection; and
            (c) a destination indication: includes a user identifier, a UE identifier, or an identifier of the UE access mode (in the case of transfer to the HODF address that sends the transfer request, the destination indication does not need to carry the identifier of the UE access mode).

            The stream operation request further carries this item (which can be combined with the foregoing items): (f) a stream operation initiator indication: indicates the source initiator of the stream operation request to the SAF (in the case that the HODF receives a transfer indication from another party, the entity that sends the indication triggers the transfer).
            The information in the stream operation request may be obtained in any of the following modes:
            (a) When the HODF and the HOSF are located on different UEs and support SIP, the HODF obtains, before the stream operation, the information in the stream operation request by subscribing to a session event of the HOSF (including the information required for transfer: identifier and type of the associated media component in the connection anchored on the HOSF, and SAF address, hereinafter the same); or
            (b) When the HODF and the HOSF are located on different UEs and do not support SIP, the HODF obtains, before the stream operation, the information in the stream operation request from the SAF through the CS network protocol, for example, through a USSD message or an SMS message; or
            (c) When the HODF and the HOSF are located on the same UE, the HODF obtains the information in the stream operation request through the internal interface.

            The stream operation request is routed to the SAF in any of the following modes:
            (a) If the HODF sends a stream operation request on the session signaling connection existing between the HODF and the SAF (the connection already exists before the stream operation), the SAF (which serves as a signaling anchor) receives the stream operation request from this connection; for example, the information required for transfer is carried in an INVITE/UPDATE message on an existing second access connection (the INVITE message on an existing connection is a ReINVITE message in the SIP); or
            (b) If the HODF establishes a new session signaling connection with the SAF and uses the connection as a second access connection, the request for establishing the session signaling connection serves as a stream operation request, and this request carries the information required for the stream operation and carries the address of the SAF, and therefore, the stream operation request is routed to the SAF according to the SAF address (for example, the PSI of the AS where the SAF is located); or
            (c) When the destination network that covers the HODF is a CS network, the CS call setup message serves as a stream operation request, and the stream operation request carries the information required for the stream operation. The called number of the call is directed to an address routable to the SAF. Further, the called number of the call is associated with a media component in the HOSF in the source domain (this number is sent from the SAF to the HODF through the CS domain); or
            (d) If the HODF establishes a new session with the SAF and uses the session as a second access connection, the session connection setup request carries the information required for the stream operation, and the stream operation request is triggered to the SAF through iFC.
         Scenario 3: a stream operation request received by the SAF from a third-party entity, requesting to transfer or copy the target media stream, which is associated with the first access connection corresponding to every HOSF in the HOSF set, to an HODF set.
            At least one of the following conditions triggers the third-party entity to send a stream operation request:
            (a) An indication is received from a third-party UE (in the case of transfer or copying);
            (b) The third-party UE detects that the current time meets a preset value (in the case of transfer or copying); and
            (c) The third-party entity HOCF at the network side detects that the network load state reaches a threshold (in the case of transfer).

            The stream operation request carries at least one of the following items:
            (a) a stream operation indication: indicates a media stream transfer or copying operation and further indicates transfer or copying of the media stream on the HOSF to the HODF;
            (b) an identifier of the target media stream's component: designed for the SAF to locate the component of the target media stream associated with the anchored first access connection;
            (c) a destination indication: includes a user identifier, a UE identifier, or an identifier of the UE access mode; and
            (d) a routing address directed to the SAF, for example, the PSI of the SAF (not required when the HOCF is combined with the SAF).

            The information in the stream operation request may be obtained in any of the following modes:
            (a) When the third-party entity is located in the UE and supports SIP, the third party obtains, before the stream operation, the information in the stream operation request by subscribing to the session event of the HOSF (including the information required for transfer: identifier and type of the associated media component in the connection anchored on the HOSF, and SAF address);
            (b) When the third-party entity HOCF at the network side and the SAF are located on different UEs, the HOCF obtains, before the stream operation, the information in the stream operation request by subscribing to the session event of the HOSF (including the information required for transfer: identifier and type of the associated media component in the connection anchored on the HOSF) from the SAF; and
            (c) When the HOCF and the SAF are located on the same UE, the HOCF obtains the information in the stream operation request through the internal interface.

            The stream operation request is routed to the SAF in any of the following modes:
            (a) If the third-party entity sends a stream operation request that carries the address of the SAF (for example, a PSI of the AS where the SAF is located), the stream operation request is routed to the SAF according to the SAF address;
            (b) The third-party entity sends a stream operation request to the HODF, and the HODF sends the stream operation request to the SAF. The stream operation request is routed to the SAF (the mode of routing the request from the HODF to the SAF is described in the part about the HODF); and
            (c) The third-party entity sends a stream operation request to the HOSF. In the routing process, a Serving Call Session Control Function (S-CSCF) of the third-party entity uses the iFC to trigger the stream operation request to the SAF (in the case of transfer).
         Scenario 4: a stream operation request received by the SAF from each HODF in an HODF set, requesting to transfer the target media stream, which is associated with the first access connection corresponding to every HOSF in the HOSF set, to an HODF set.
            The stream operation request carries at least one of the following items:
            (a) a destination indication: includes a user identifier, a UE identifier, or an identifier of the UE access mode (if the stream operation indication expresses the media transfer mode obtained by the HODF, the destination indication does not need to carry the identifier of the UE access mode; otherwise, the destination indication indicates that the destination is the HODF of the initiator);
            (b) an association indication: indicates to the SAF that the request is associated with the stream operation request from other HODFs in the HODF set. After obtaining this indication, the SAP judges whether to wait for the associated HODF to send a stream operation request, and combines the received stream operation requests;
            (c) a stream operation indication: indicates a media stream transfer or copying operation; and
            (d) an identifier of the target media stream's component: designed for the SAF to locate the component of the target media stream associated with the anchored first access connection.

            The conditions for triggering each HOSF to send a stream operation request, the mode of obtaining the information in the stream operation request, and the mode of routing the stream operation request to the SAF are the same as those in scenario 2.
         Scenario 5: a stream operation request received by the SAF from each HOSF in an HOSF set, requesting to transfer the target media stream, which is associated with the first access connection corresponding to every HOSF in the HOSF set, to an HODF set.
            The stream operation request carries at least one of the following items:
            (a) a stream operation indication: indicates a media stream transfer or copying operation;
            (b) an identifier of the target media stream's component: designed for the SAF to locate the component of the target media stream associated with the anchored first access connection;
            (c) a destination indication: includes a user identifier, a UE identifier, or an identifier of the UE access mode; and
            (d) an association indication: indicates to the SAF that the request is associated with the stream operation request from other HOSFs in the HOSF set. After obtaining this indication, the SAF judges whether to wait for the associated HOSF to send a stream operation request, and combines the received stream operation requests.

            The conditions for triggering each HOSF to send a stream operation request, the mode of obtaining the information in the stream operation request, and the mode of routing the stream operation request to the SAF are the same as those in scenario 1.
      (2.2) After the SAF receives a stream operation request in any of the foregoing scenarios, the SAF further: checks validity, and associates a media component corresponding to the target media stream with a second access connection between the SAF and each HODF in an HODF set after the validity check succeeds; if the validity check fails, the SAF notifies the failure to the initiator of the stream operation request.
         The validity check includes but is not limited to:
         E1: checking whether the UE-S user has subscribed to the stream transfer service;
         E2: checking whether the transfer type is allowed;
         E3: checking whether the SAF is able to locate the transferred media stream;
         E4: checking whether the UE-T identifier is allowed or in an invalid format;
         E5: checking whether the operator policy allows the operation;
         E6: checking whether transfer is allowed by the session state of the first access connection associated with the transferred media stream;
         E7: checking whether the SAF is able to locate the source user successfully;
         E8: checking whether the SAF is able to successfully locate the first access connection associated with the transferred media stream; and
         E9: checking whether the processing capabilities of the destination end support the transferred media stream;
         or any combination thereof.
      (2.3) The second access connection between the SAF and each HODF in the HODF set is: (a) a session signaling connection already existing between the HODF and the SAF; or (b) a new session signaling connection established between the HODF and the SAF.
         Further, as regards whether to select the existing session signaling connection or the newly established session signaling connection: If the SAF determines that the stream operation destination indication in the received stream operation request is a session identifier and corresponds to an existing session signaling connection, this session signaling connection is preferred as a second access connection; or, if the SAF determines that the stream operation destination indication in the received stream operation request is a UE identifier or a mode identifier on a UE and corresponds to an existing session signaling connection, this session signaling connection is preferred as a second access connection.
         Further, the modes of establishing a second access connection or using an existing second access connection include: When the SAF receives a stream transfer request from an HOSF or a third party, the SAF initiates setup of the second access connection to the HODF according to the information in the stream transfer request to add the media component corresponding to the transferred media stream, or initiates the setup on an existing connection. After receiving the request, the HODF interacts with the SAF to establish a second access connection; or, when the SAF receives a second access connection setup request from the HODF and the request carries a stream operation indication, the SAF interacts with the HODF to establish the second access connection.
         The second access connection setup request further includes an indication of not triggering other ASs than the SAF on the second access connection. If the HODF and the HOSF belong to different user-defined groups (for example, the HODF and the HOSF belong have the same IMS network public user identifier (IMPU), or have the same IMS network private user identifier (IMPI), or belong to all UEs of the same subscriber), the SAF provided for the HODF in the home IMS network of the HODF is called a second SAF.
         If the second access connection triggers the second SAF, the stream operation policy configured by the HOSF user and the HODF user is exchanged between the SAF and the second SAF in the signaling interaction process of establishing the second access connection. When receiving a subsequent stream operation request after receiving the stream operation policy, the SAF and the second SAF judge whether to allow the corresponding stream operation according to this policy. Alternatively, the user's transfer policy is stored (preset) in the SAF and the second SAF, and the SAF or the second SAF judges whether to allow transfer upon receiving a stream transfer request.
         If transfer occurs after the media stream is already transferred to the HODF, the second SAF or the SAF controls the transfer.
         Further, as regards exception handling: if any of the second access connections are established unsuccessfully among the second access connections between the SAF and each HODF in an HODF set, the SAF goes on with the media stream operation for the second access connections established successfully according to the network policy or according to the processing indication about partial operation failure in the stream operation request, or terminates the stream operation process for all second access connections.
      (2.4) The HODF set is determined according to the received request and includes at least one HODF. The HODF corresponds to at least one second access connection. Any second access connection is associated with at least one media component corresponding to the transferred media stream. Each second access connection may be associated with different media components. Media components are added to such access connections to process continuity of media streams, and such access connections are associated with the media components. Therefore, such access connections are called second access connections in contrast with the source connections of continuity. During the transfer, the first access connection does not necessarily correspond to the second access connection in a one-to-one relationship.
   (3) Step S13 includes the following contents:
      (3.1) The SAF performs a stream operation on the second access connection, and processes the continuity of the target media stream. More specifically, the SAF controls the association between the second access connection in the second access connection set and the remote connection, and transfers the target media stream from the HOSF set to the HODF set. Alternatively, the SAF performs a stream operation on the second access connection, and processes the continuity of the transferred media stream. More specifically, the SAF controls the association between the second access connection in the second access connection set and the remote connection, and copies the target media stream from the HOSF set to the HODF set. The association control is: The SAF provides the signaling interaction between the second access connection and the session corresponding to the remote connection to redirect the media stream.
         As regards the copying operation, the SAF works together with a BAF-C to add a BAF-U to the user data bearer connection of the session between the HODF set and the HORF. "Working together" here means that the SAF represents the UE-S (HOSF) set and the UE-R (HORF) to negotiate media with the BAF-C, thus redirecting the media stream of the UE-S and the UE-R to the BAF-U and anchoring the call in the BAF-U media bearer connection. Afterward, the SAF instructs the BAF-C to copy the target media stream from the HOSF set in the source network to the HODF set in the destination network. After receiving the copying indication, the BAF-C requests the conference resources on the BAF-U, connects the media bearers of all parties (the HOSF set, and the HORF) in the media interaction to the conference resources (namely, redirects the media to the BAF-U), and modifies the direction of transmitting the media between the HODF set and the BAF-U (to transmit the media from the BAF-U to the HODF unidirectionally), thus copying the media stream. A media operation control relation exists between the BAF-C and the BAF-U. If the BAF-C is functionally combined with the SAF into one, the communication is performed through an internal interface; otherwise, the communication is performed through a SIP interface.
      (3.2) The SAF performs stream operations on the second access connection in any of the following exemplary modes:
         (a) The SAF negotiates media with the HORF on the remote connection after receiving Session Description Protocol (SDP) information of the HODF from all second access connections; or
         (b) The SAF negotiates media with the HORF on the remote connection immediately after receiving SDP information of the HODF from any second access connection; or
         (c) The SAF negotiates media with the HORF on the remote connection immediately after receiving SDP information of a specific number of HODFs from the second access connection. The specific number of HODFs may be configured by the network.

         The SAF may select any of the foregoing modes as a default processing mode according to the network policy, or make a judgment according to whether a stream transfer association indication is carried in the received stream transfer request. If the received stream transfer request carries the stream transfer association indication, the SAF re-negotiates media with the HORF after receiving the SDP information of all associated HODFs; otherwise, the SAF initiates the re-negotiation process immediately after receiving the SDP information. The stream transfer association indication is designed to indicate the association between this request and the transfer request of other HODFs to the SAF. After receiving this indication, the SAF may judge whether to wait for the transfer initiated by the associated HODF and to perform combination.
      (3.3) The media component in the HODF may be transferred back to the HOSF through the SAF, and transferred between the HOSF and the HODF freely.
   (4) After step S3, a release step may be performed, as detailed below:
      After processing the target media stream, the SAF may release the media according to the policy: If the SAF determines that the media streams associated with the first access connection include other media streams in addition to the target media stream, the SAF releases the target media stream associated with the first access connection according to either of these policies: (a) The SAF releases only the associated target media stream if the SAF negotiates media with the HOSF corresponding to the first access connection; or (b) The SAF releases the first access connection so that other associated media streams are released together with the target media stream. The SAF may obtain the policy from the stream operation request, or from the SAF configuration information. The policies include: deleting the transferred media component from the first access connection and retaining other media components; and/or releasing the first access connection where the media component exists.
      After processing the target media stream, the SAF may perform this default release step: If the SAF determines that no media stream except the target media stream exists in the media streams associated with the first access connection, the SAF releases this first access connection.
      The stream operation request further carries an indication about subscription to relevant events of the target media stream, and therefore, according to this indication, the SAF notifies the change to the initiator of the stream operation request upon the change of the components of the media stream. Specifically, the notification is a SIP NOTIFY message. The indication about subscription to relevant events of the transferred media stream is designed to subscribe to the relevant events of the transferred media stream from the SAF. The relevant events include all events that subsequently occur on the transferred media component, for example, transfer to other destination ends, deletion, and modification.
II. An SAF is provided in an embodiment of the present invention. The SAF corresponds to an AS in the home IMS network of the HOSF. As shown in FIG. 3, the SAF includes:
   a triggering unit, configured to trigger the SAF after receiving a request for providing the SAF between a set of first access connections and a remote connection corresponding to an HORF, where each first access connection corresponds to an HOSF in an HOSF set in a session and is associated with a target media stream;
   a receiving unit, configured to receive a stream operation request after the SAF is triggered;
   an associating unit, configured to associate a media component corresponding to the target media stream with a second access connection between the SAF and each HODF in an HODF set after receiving the stream operation request; and
   a media stream processing unit, configured to: perform stream operations on the second access connection and process continuity of the target media stream.
   The media stream processing unit may include:
      a first association controlling unit, configured to control the association between the second access connection in the second access connection set and the remote connection; and
      a transferring subunit, configured to transfer the target media stream from an HOSF set to an HODF set.
      The media stream processing unit may further include:
         a second association controlling unit, configured to control the association between the second access connection in the second access connection set and the remote connection; and
         a copying subunit, configured to: control the association between the second access connection in the second access connection set and the remote connection and copy the target media stream from the HOSF set to the HODF set.

         Further, the stream operation request received by the associating unit includes but is not limited to a stream operation request in the following scenarios (the details are the same as those about the method provided herein, and are applicable to the SAF provided herein):
         Scenario 1: a stream operation request received by the SAF from an HOSF, requesting to transfer or copy the target media stream, which is associated with the first access connection corresponding to every HOSF in the HOSF set, to an HODF set.
         Scenario 2: a stream operation request received by the SAF from an HODF, requesting to transfer or copy the target media stream, which is associated with the first access connection corresponding to every HOSF in the HOSF set, to an HODF set.
         Scenario 3: a stream operation request received by the SAF from a third-party entity, requesting to transfer or copy the target media stream, which is associated with the first access connection corresponding to every HOSF in the HOSF set, to an HODF set.
         Scenario 4: a stream operation request received by the SAF from each HODF in a HODF set, requesting to transfer the target media stream, which is associated with the first access connection corresponding to every HOSF in the HOSF set, to an HODF set.
         Scenario 5: a stream operation request received by the SAF from each HOSF in an HOSF set, requesting to transfer the target media stream, which is associated with the first access connection corresponding to every HOSF in the HOSF set, to an HODF set.

         Further, the second access connection between the SAF involved in the functions of the associating unit and each HODF in the HODF set is: (a) a session signaling connection already existing between the HODF and the SAF; or (b) a new session signaling connection established between the HODF and the SAF.
         As regards whether to select the existing session signaling connection or the newly established session signaling connection: If the SAF determines that the stream operation destination indication in the received stream operation request is a session identifier and corresponds to an existing session signaling connection, this session signaling connection is preferred as a second access connection; or, if the SAF determines that the stream operation destination indication in the received stream operation request is a UE identifier or a mode identifier on a UE and corresponds to an existing session signaling connection, this session signaling connection is preferred as a second access connection.
         The SAF may exercise control to establish a second access connection in this mode: When the SAF receives a stream operation request from the HOSF or the third-party entity and determines the need of establishing a second access connection, the SAF sends a request for establishing a second access connection to each HODF in the HODF set, and the HODF interacts with the SAF to establish the second access connection after receiving the request; or, when the SAF receives a request for establishing a second access connection from the HODF and the request carries a stream operation indication, the SAF interacts with the HODF to establish the second access connection.
         If any of the second access connections are established unsuccessfully among the second access connections between the SAF and each HODF in an HODF set, the SAF goes on with the media stream operation for the second access connections established successfully according to the network policy or according to the processing indication about partial operation failure in the stream operation request, or terminates the stream operation process for all second access connections.
         Further, the media stream processing unit performs a stream operation on the second access connection, and processes the continuity of the target media stream. More specifically, the SAF controls the association between the second access connection in the second access connection set and the remote connection, and transfers the target media stream from the HOSF set to the HODF set. Alternatively, the SAF performs a stream operation on the second access connection, and processes the continuity of the target media stream. More specifically, the SAF controls the association between the second access connection in the second access connection set and the remote connection, and copies the target media stream from the HOSF set to the HODF set.
         As regards the copying operation, the SAF works with a BAF-C to add a BAF-U to the user data bearer connection of the session between the HODF set and the HORF. Afterward, the SAF instructs the BAF-C to copy the target media stream from the HOSF set in the source network to the HODF set in the destination network. After receiving the copying indication, the BAF-C requests the conference resources on the BAF-U, connects the media bearers of all parties (the HOSF set, and the HORF) in the media interaction to the conference resources (namely, redirects the media to the BAF-U), and modifies the direction of transmitting the media between the HODF set and the BAF-U (to transmit the media from the BAF-U to the HODF unidirectionally), thus copying the media stream. A media operation control relation exists between the BAF-C and the BAF-U. If the BAF-C is functionally combined with the SAF into one, the communication is performed through an internal interface; otherwise, the communication is performed through a SIP interface.
         Further, the media stream processing unit performs stream operations on the second access connection in any of the following exemplary modes:
         (a) The SAF negotiates media with the HORF on the remote connection after receiving SDP information of the HODF from all second access connections; or
         (b) The SAF negotiates media with the HORF on the remote connection immediately after receiving SDP information of the HODF from any second access connection; or
         (c) The SAF negotiates media with the HORF on the remote connection immediately after receiving SDP information of a specific number of HODFs from the second access connection. The specific number of HODFs may be configured by the network.

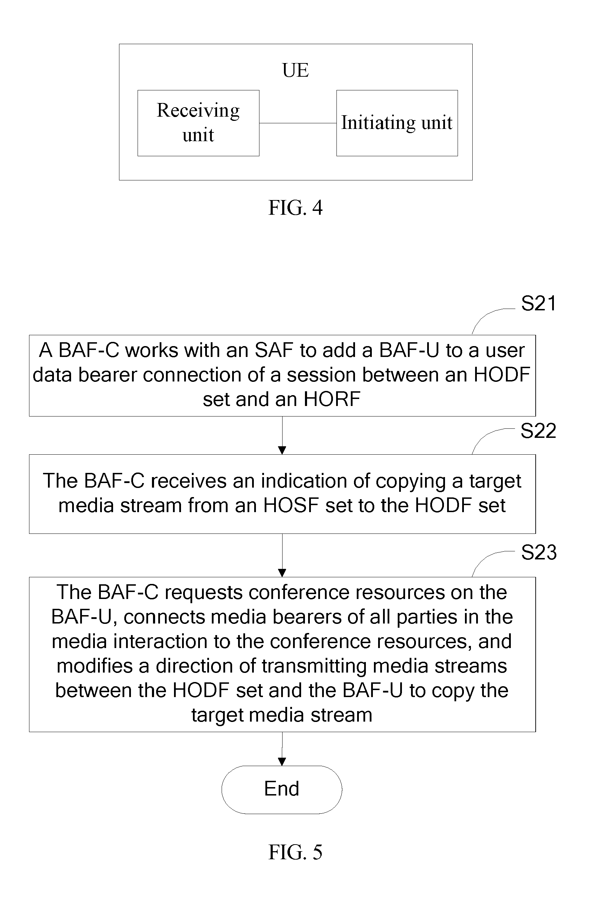

         The SAF may further include a checking unit. The checking unit is located between the receiving unit and the associating unit, and is configured to check validity of the stream operation request received by the receiving unit and notify the associating unit after success of the check.
         The SAF may further include a releasing unit, which is configured to release the resources occupied by the target media stream at the HOSF side after the media stream processing unit processes the continuity of the target media stream. Specifically, after the media stream processing unit processes the target media stream, if the releasing unit determines that the first access connection is associated with the components of at least two media streams, the SAF negotiates media with each HOSF in the HOSF set according to the policy to release the components of the target media stream associated with each first access connection. When the releasing unit determines that the first access connection is associated with the components of a media stream, the SAF negotiates media with each HOSF in the HOSF set according to the policy to release each first access connection.
         The releasing unit may obtain the policies from the stream operation request, or from the SAF configuration information. The policies include: deleting the transferred media component from the first access connection and retaining other media components; and/or releasing the first access connection where the media component exists.
         The stream operation request further carries an indication about subscription to relevant events of the target media stream, and therefore, according to this indication, the SAF notifies the change to the initiator of the stream operation request upon the change of the components of the media stream. Specifically, the notification is a SIP NOTIFY message. The indication about subscription to relevant events of the transferred media stream is designed to subscribe to the relevant events of the transferred media stream from the SAF. The relevant events include all events that subsequently occur on the transferred media component, for example, transfer to other destination ends, deletion, and modification.
         In conclusion, the contents about the SAF in the method provided herein are applicable to the SAF provided herein.
III. A system for processing continuity of media streams in a session according to an embodiment of the present invention includes: an HOSF set, an HODF set, an HORF, and an SAF (the SAF is the same as what is described above, and is not further described further). The HOSF set and the HODF set may belong to different UEs of the same user, or belong to different access modes of the same UE, or belong to UEs of different users, or access modes of the UE.
   Further, the system may include a second SAF. The second SAF is triggered in the process of establishing the second access connection, and serves the purpose of anchoring in the process of processing the continuity of the target media stream. The second SAF is detailed in the subsequent embodiment.
   Further, the system may include a BAF-C and a BAF-U. If the stream operation request is a copying operation request, the SAF works with a BAF-C to add a BAF-U to the user data bearer connection of the session between the HODF set and the HORF. Afterward, the SAF instructs the BAF-C to copy the target media stream from the HOSF set in the source network to the HODF set in the destination network. After receiving the copying indication, the BAF-C requests the conference resources on the BAF-U, connects the media bearers of all parties (the HOSF set, and the HORF) in the media interaction to the conference resources (namely, redirects the media to the BAF-U), and modifies the direction of transmitting the media between the HODF set and the BAF-U (to transmit the media from the BAF-U to the HODF unidirectionally), thus copying the media stream. A media operation control relation exists between the BAF-C and the BAF-U. If the BAF-C is functionally combined with the SAF into one, the communication is performed through an internal interface; otherwise, the communication is performed through a SIP interface.
IV. A UE is provided in an embodiment of the present invention. The UE may be an HOSF, an HODF, a third-party UE, or a network-side third-party entity. As shown in FIG. 4, the UE includes:
   a receiving unit, configured to receive a stream operation indication from a user or another UE or network element; and
   a sending unit, configured to send a stream operation request to the network according to the indication received by the receiving unit.

   In conclusion, the contents about the HOSF, HODF, third-party UE, or network-side third-party entity in the method provided herein are applicable to the UE provided herein.
V. A method for copying media streams is provided in an embodiment of the present invention. As shown in FIG. 5, the method includes the following steps:
   S21: The BAF-C works together with the SAF to add a BAF-U to a user data bearer connection of a session between an HODF set and an HORF.
      "Working together" here means that the SAF represents the UE-S (HOSF) set and the UE-R (HORF) to negotiate media with the BAF-C, thus redirecting the media stream of the UE-S and the UE-R to the BAF-U and anchoring the call in the BAF-U media bearer connection.
   S22: The BAF-C receives an indication of copying a target media stream from an HOSF set to the HODF set.
      The indication received by the BAF-C comes from the SAF.
   S23: The BAF-C requests conference resources on the BAF-U, connects media bearers of all parties in the media interaction to the conference resources, and modifies the direction of transmitting media streams between the HODF set and the BAF-U to copy the target media stream.

   The parties in the media interaction include an HOSF set and an HORF.
   "Modifying the direction of transmitting media streams between the HODF set and the BAF-U" refers to modifying the direction so that the media streams are transmitted from the BAF-U to the HODF unidirectionally.
   A media operation control relation exists between the BAF-C and the BAF-U. If the BAF-C is functionally combined with the SAF into one, the communication is performed through an internal interface; otherwise, the communication is performed through a SIP interface.
VI. A system for copying a media stream according to an embodiment of the present invention includes: an SAF, an HOSF set, an HODF set, an HORF, a BAF-C, and a BAF-U.

The SAF works with the BAF-C to add a BAF-U to a user data bearer connection of a session between an HODF set and an HORF.

The SAF instructs the BAF-C to copy the target media stream from an HOSF set to an HODF set.

The BAF-C is configured to: request conference resources on the BAF-U after receiving a copying indication, connect media bearers of all parties in the media interaction to the conference resources, and modify a direction of transmitting media streams between the HODF set and the BAF-U to copy the target media stream.

The method and the system for copying media streams in part V and part VI above can copy media streams to a third-party entity without interrupting the session that involves the copied media. For example, when receiving a favorite music album on the UE, the user sends an instruction to save the album to the storage device at home while listening to the music. Especially, when the destination of media copying does not support the format of the copied media, the BAF-U may convert and adapt the media format.

Described above is an outline of the embodiments of the present invention. The embodiments of the present invention are further detailed below.

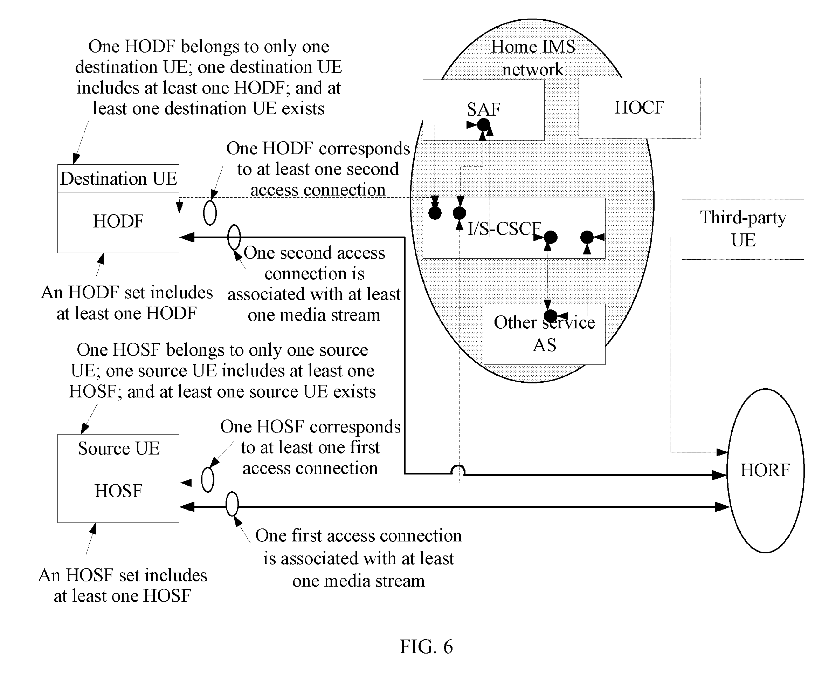

[Embodiment 1.1] System architecture 1: An architecture in which a single SAF is deployed for transferring media streams is provided in this embodiment (in the case that the HOSF and the HODF belong to the same user). The entities in this system architecture are shown in FIG. 6.

This figure shows only the relevant parts, and omits some IMS/CS network entities. In this figure, the hyphened arrow indicates the first access connection; the solid arrow indicates the media bearer; the dotted dashed arrow indicates the second access connection; and the dotted arrow indicates the remote connection.

The HODF communicates with the SAF in the home IMS network of the HODF, and the HOSF communicates with the SAF in the home IMS network of the HOSF, through SIP signaling, or through CS signaling. If the communication is performed through CS signaling, an entity that interworks with the CS domain and a CS agent entity (not shown in FIG. 6) need to be added to the home IMS network of the HOSF to enable interworking of the CS signaling and the SIP signaling for the SAF.

When the HODF and the HOSF are in the same UE, the HODF communicates with the HOSF through an internal interface; otherwise, they communicate through a SIP-enabled interface. (The HODF and the HOSF may be on different UEs).

Optionally (if the entity indicated by a dotted line is in use), an HOCF is added to the system, and both the HOCF and the third-party UE communicate with the SAF through the SIP signaling of the IMS network (when the HOCF and the SAF are combined, they communicate through an internal interface), or communicate with the HODF.

The ASs of other services are on the remote leg. Compared with other ASs, the SAF is closer to the user side. Therefore, the ASs of other services are not affected by the transfer.

The HORF shown in FIG. 6 may be a UE that supports SIP signaling, or, if the peer of the session is a CS UE, a Media Gateway Control Function (MGCF) that interworks with the CS UE.

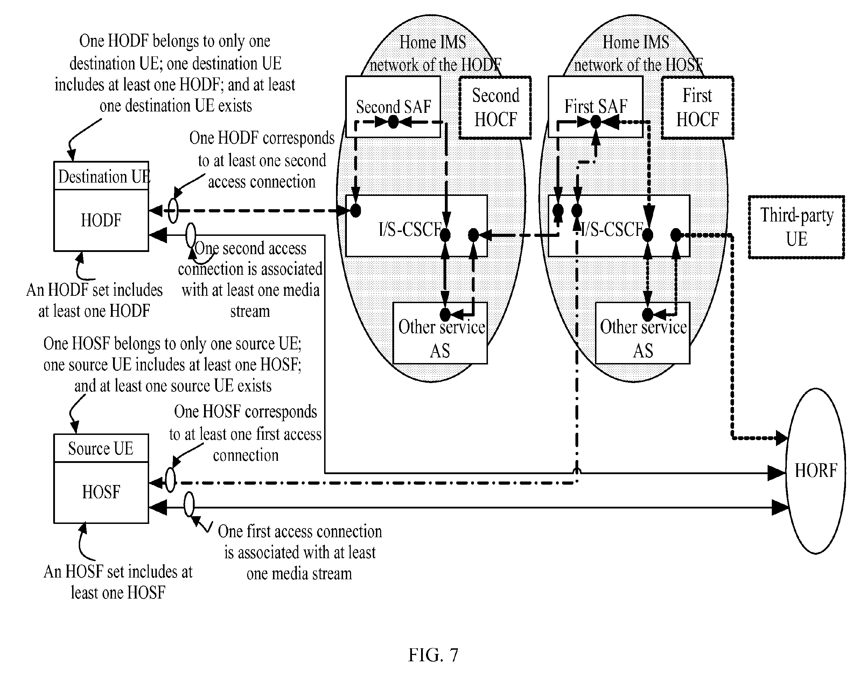

[Embodiment 1.2] System architecture 2: This embodiment provides an architecture in which multiple SAFs are deployed for transferring media streams. The entities in this system architecture are shown in FIG. 7.

This figure shows only the relevant parts, and omits some IMS/CS network entities. In this figure, the hyphened arrow indicates the first access connection; the solid arrow indicates the media bearer; the dotted dashed arrow indicates the second access connection; the dotted arrow indicates the remote connection; and the hyphened and dashed arrow indicates a connection between the SAFs.

The HODF communicates with the SAF in the home IMS network of the HODF, and the HOSF communicates with the SAF in the home IMS network of the HOSF, through SIP signaling, or through CS signaling. If the communication is performed through CS signaling, an entity that interworks with the CS domain and a CS agent entity (not shown in FIG. 7) need to be added to the home IMS network of the HOSF to enable interworking of the CS signaling and the SIP signaling for the SAF.

The HODF communicates with the HOSF through a SIP-enabled interface.

In FIG. 7, the connection between the SAFs is part of the second access connection from the perspective of the first SAF, and is part of the remote connection from the perspective of the second SAF. A first SAF may correspond to multiple second SAFs (if the HODF belongs to different users, different home IMS networks may exist).

Optionally (if the entity indicated by a dotted line is in use), a first HOCF is added to the home IMS network of the HOSF in the system, and a second HOCF and a third-party UE are added to the home IMS network of the HODF. Both the first HOCF and the second HOCF communicate with the SAF through the SIP signaling of the IMS network (when the HOCF is combined with the SAF, they communicate through an internal interface), or communicate with the HODF.

The ASs of other services are on the remote leg. Compared with other ASs, the SAF is closer to the user side. Therefore, the ASs of other services are not affected by the transfer.

The HORF shown in FIG. 7 may be a UE that supports the SIP signaling, or, if the peer of the session is a CS UE, an MGCF that interworks with the CS UE.

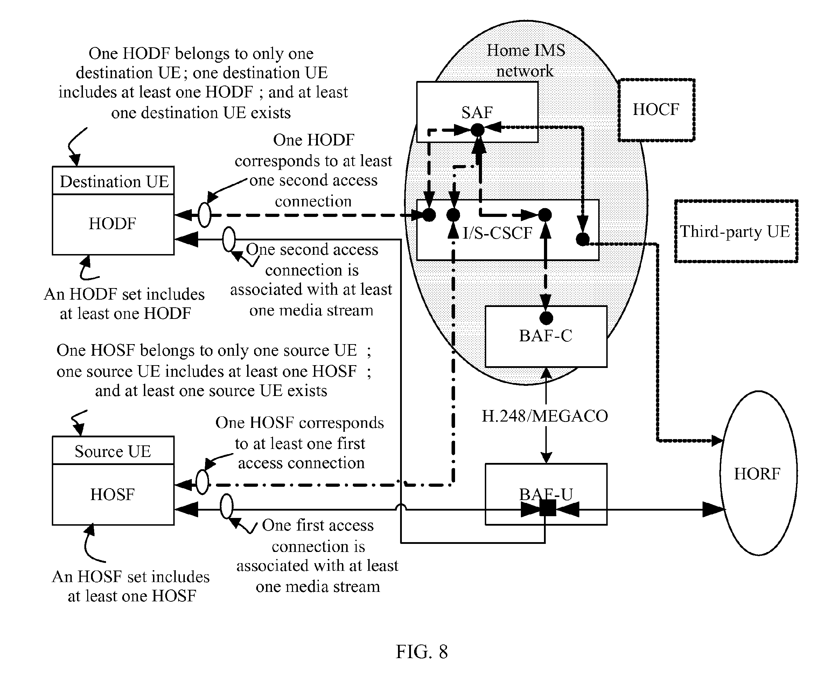

[Embodiment 1.3] System architecture 3: This embodiment provides an architecture in which a single SAF is deployed for copying media streams. The entities in this system architecture are shown in FIG. 8.

This figure shows only the relevant parts, and omits some IMS/CS network entities. In this figure, the hyphened arrow indicates the first access connection; the solid arrow indicates the media bearer; the dotted dashed arrow indicates the second access connection; and the dotted arrow indicates the remote connection.

The HODF communicates with the SAF in the home IMS network of the HODF, and the HOSF communicates with the SAF in the home IMS network of the HOSF, through SIP signaling, or through CS signaling. If the communication is performed through CS signaling, an entity that interworks with the CS domain and a CS agent entity (not shown in FIG. 8) need to be added to the home IMS network of the HOSF to enable interworking of the CS signaling and the SIP signaling for the SAF.

When the HODF and the HOSF are in the same UE, the HODF communicates with the HOSF through an internal interface; otherwise, they communicate through a SIP-enabled interface (The HODF and the HOSF may be on different UEs).

The SAF communicates with the BAF-C through a SIP-enabled interface, or, if the SAF is combined with the BAF-C, through an internal interface.

The BAF-C communicates with the BAF-U through an H.248 protocol or a MEGACO protocol.

Optionally (if the entity indicated by a dotted line is in use), an HOCF is added to the system, and both the HOCF and the third-party UE communicate with the SAF through the SIP signaling of the IMS network (when the HOCF and the SAF are combined, they communicate through an internal interface), or communicate with the HODF.

The ASs of other services are on the remote leg. Compared with other ASs, the SAF is closer to the user side. Therefore, the ASs of other services are not affected by the transfer.

The HORF shown in FIG. 8 may be a UE that supports SIP signaling, or, if the peer of the session is a CS UE, an MGCF that interworks with the CS UE.

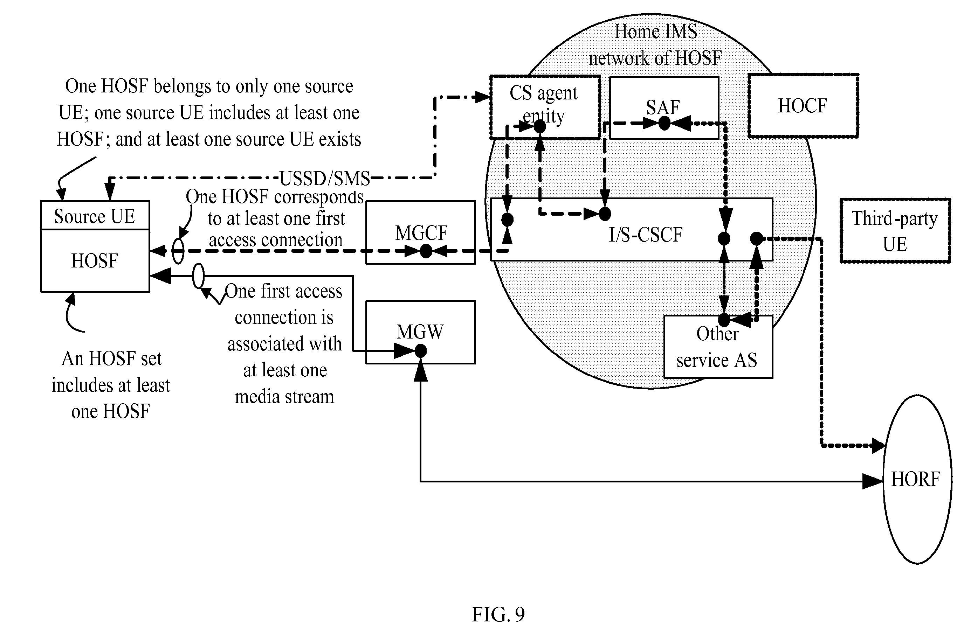

[Embodiment 1.4] This embodiment provides a system architecture in which the HOSF or the HODF is located in a CS network. The entities in this system architecture are shown in FIG. 9:

This figure shows only the relevant parts, and omits some IMS/CS network entities. In this figure, the hyphened arrow indicates the first access connection; the solid arrow indicates the media bearer; the dotted dashed arrow indicates the second access connection; and the dotted arrow indicates the remote connection.

Interworking entities MGCF and MGW are added between the HOSF and the SAF in the home IMS network. The MGCF and the MGW act as a portal of the CS domain user in the IMS network. The HOSF communicates with the MGCF through CS call signaling, and the MGCF communicates with the IMS network through SIP signaling.

Optionally, the CS agent entity (indicated by dotted lines) is also inserted into the signaling path between the HOSF and the SAF, and performs relevant operations in the IMS network on behalf of the HOSF. The HOSF interacts with the CS agent entity through USSD or SMS to transmit call control information or stream operation information. The CS agent entity associates the control information in this channel with the first access connection according to the association information in this channel. In the actual deployment, the CS agent entity may be combined with the SAF.

FIG. 9 illustrates a mode of inserting a CS agent entity into the first access connection, but the actual application is not limited to this mode.

When the HODF is in the CS network, the corresponding second access connection is the same as what is described above.

Other entities and the interaction between them are the same as those in embodiment 1.1.

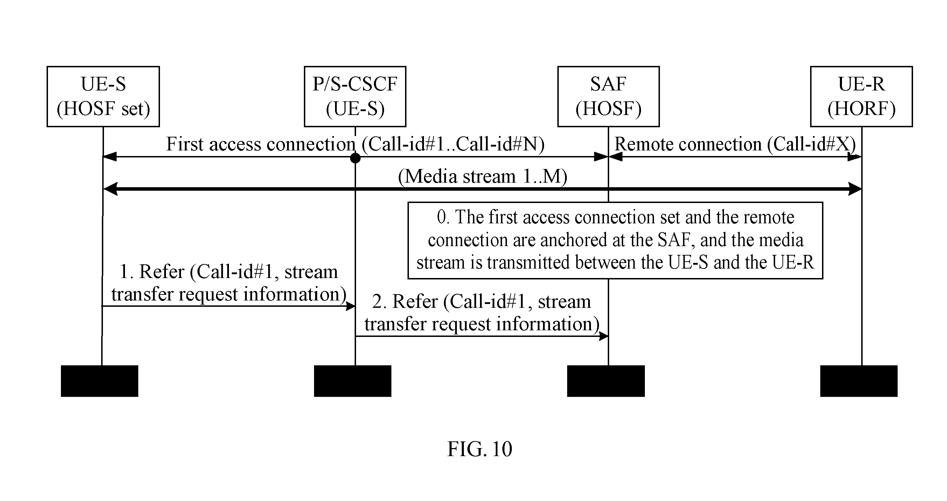

[Embodiment 2.1] This embodiment provides routing of a stream operation request, which is sent by a source end (HOSF) in session-dependent mode. As shown in FIG. 10, the routing process includes the following steps:
0: The prerequisites are as follows. The signaling plane of the session control between an HOSF set (which includes at least one HOSF) and a UE-R has finished anchoring in the SAF of the home IMS network of the source user, and a media stream (which includes at least one media component) is exchanged on the bearer between the two UEs (Note <1>).
1: The UE-S (HOSF) receives a user indication (Note <2>), and sends an operation request in the first access connection, where the operation request carries the information required by the stream operation (Note <3>). For example, the operation request is a SIP Refer message.
2: The request is transmitted along the path of the first connection to the SAF for processing. (Note <4>)

Note <1>: The figure omits the interaction between the Proxy Call Session Control Function (P-CSCF) and the S-CSCF, and the entity at the UE-R network side; in the figure, the HOSF set is located on a UE-S, but in practice, the HOSF set may be located on multiple UEs, and therefore, the HOSF may correspond to one UE or correspond to an access mode on a UE. If the HOSF corresponds to an access mode on a UE, one contact address or one CS address exists for contact with the IMS network.

Note <2>: The condition may be combined with any of the following trigger conditions:
(b) The HOSF detects that the strength of the radio signal meets a preset threshold; or
(c) The HOSF detects that the QoS of the media meets the preset threshold; or
(d) The HOSF detects a UE which is more appropriate for processing the media; or
(e) The HOSF detects that the time meets a preset value.

Note <3>: The stream operation request shown in the figure carries at least any combination of the following items:
(a) a stream operation indication: This indication indicates a media stream operation (different from session operations such as transfer), further indicates transfer or copying of the media stream on the HOSF to the HODF (this indication may be a defined SIP header field, method, parameter or message body, or may be a PSI or message name of the SAF; multiple media streams have one indication, or each media stream has a different indication).
(b) an identifier of the media component to be operated: The SAF uses this identifier to locate the media components to be operated, where the media components are associated with all anchored first access connections (the identifier may be a global identifier identifiable to the SAF <such as parameters in line m plus line c in the SDP information corresponding to the media>, or the identifier is an identifier of the first access connection plus the identifier of the media stream associated with and controlled by the first access connection <such as line m>).
(c) an operation destination indication corresponding to the media stream to be operated: The operation destination corresponding to each media stream to be operated may be an indication addressed to a user identifier (for example, the IMPU, TELURI, SIP Uniform Resource Identifier (URI), mobile or fixed ISDN number, PSTN number), an indication addressed to a UE identifier (for example, a personal ME identifier under a GRUU or user identifier, or an instance-id of a UE, or preference information of the access UE), or an indication addressed to the next access mode of the UE (for example, preference information of an access network).

Further, the stream operation request may carry any combination of the following items:
(d) a SIP address directed to the SAF, for example, the PSI of the SAF.
(e) an indication of processing in the case of partial operation failure: This indication to the SAF indicates whether to continue processing or return information about failure of the whole media stream operation in the case that some of the transferred media components are operated unsuccessfully.
(f) an indication of processing remaining media components of the source domain: This indication to the SAF indicates processing of the media component in the source domain after completion of operating the media stream. The processing may be: deleting the media component from the corresponding first access connection, or releasing the first access connection of the media component.
(g) an indication of subscribing to relevant events of the target media stream: This indication is designed to subscribe to the relevant events of the target media stream from the SAF. The relevant events include all events that subsequently occur on the transferred media component, for example, transfer to other destination ends, deletion, and modification.

Other unspecified information may be carried in the header field, parameter, method, or message body of a SIP message, or in a specially defined stream operation structure. When the HOSF sends the request in the CS network, the HOSF may send a request to the CS agent entity through USSD or SMS, where the request carries the foregoing information and the session identifier corresponding to the first access connection. The CS agent entity locates the corresponding session according to the identifier, converts the request content into an IMS format, and, within the located session, sends the request to the SAF for processing (not shown in the figure).

Note <4>: This embodiment is applicable to the scenario in which all elements in the HOSF set initiate a stream operation to the SAF, but the carried information further includes:
(h) a stream operation association indication: This indication to the SAF is designed to indicate the association between this request and the operation request of other HOSFs. After receiving the indication, the SAF judges whether to wait for the operation initiated by the associated HOSF before the combination processing. This indication may be carried in a message described in <Note 3>, and its content may be a Boolean indication about whether association exists, or an indication of other initiators.

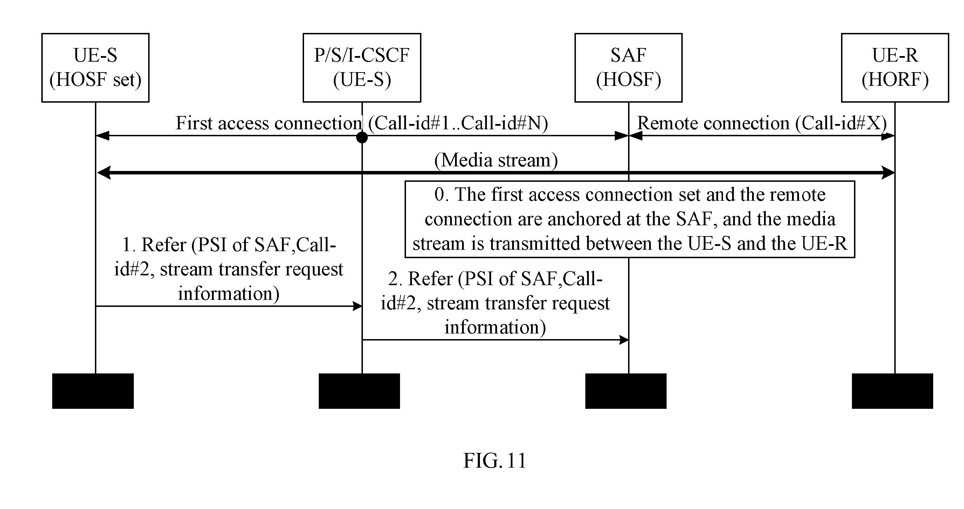

[Embodiment 2.2] This embodiment provides routing of a stream operation request, which is sent by a source end (HOSF) in session-independent mode 1. As shown in FIG. 11, the routing process includes the following steps:
0: The prerequisites are as follows. The signaling plane of the session control between an HOSF set (which includes at least one HOSF) and a UE-R has finished anchoring in the SAF of the home IMS network of the source user, and a media stream (which includes at least one media component) is exchanged on the bearer between two UEs (Note <1>).
1: The UE-S (HOSF) receives a user indication (Note <2>), and sends an operation request outside the first access connection (for example, a Refer message), where the operation request carries the information required by the stream operation request (Note <3>) and the URI of the request is configured as a PSI of the SAF.
2: After the request is routed to the S-CSCF of the UE-S, the request may be routed to the SAF through a Ma interface according to the PSI routing mode, or, further routed to the SAF through the S-CSCF corresponding to the PSI. The routing based on the PSI is covered by the prior art, and is not detailed herein. (Note <4>)

Note <1>: See Note <1> in embodiment 2.1.

Note <2>: For trigger conditions, see Note <2> in embodiment 2.1.

Note <3>: The carried information required by the stream operation and the carrying mode are the same as those described in Note <3> in embodiment 2.1 except that when the HOSF sends the request in the CS network, the HOSF may use USSD or SMS to send a request that carries the foregoing information to the CS agent entity. The CS agent entity converts the request content into the IMS format, and, through a new session, sends the request to the SAF for processing (not shown in the figure).

Note <4>: This routing mode is also applicable to the scenario of routing a request of a third party at the user side or network side (HOCF) to the SAF. When the third party sends a stream operation request, the trigger conditions include:
(a) The third party detects that the network load state reaches a preset threshold;
(b) The third-party entity (HOCF) at the network side detects that the QoS of media transmission on the HOSF reaches a preset threshold; and
(c) The third-party entity (HOCF) at the network side detects that the signal strength of the session connection corresponding to the first access connection corresponding to the HOSF set reaches a preset threshold (the information in (a), (b) and (c) may be obtained by the network element of the access network together with the network element of the core network through an operation management channel).

Compared with the information that needs to be carried in the request in the case that the request is sent by the HOSF, the information that needs to be carried in this embodiment includes at least:
a routing address directed to the SAF, for example, a PSI of the SAF (not required if the request is sent by the HOCF and the HOCF is combined with the SAF).

Such information may be carried in the header field, parameter, method, or message body of a SIP message, or in a specially defined stream operation structure. Before the request is sent, the third-party entity subscribes to the information required for the stream operation (such as properties and identifiers of the media in the session) from the source user. If the third-party entity at the network side (such as the HOCF) is combined with the SAF, it is not necessary to subscribe to such information. For the purpose of subscription, the third-party entity sends a SIP SUBSCRIBE request to the SAF in the home network of the HOSF or the presence server that processes the subscription, and a SIP NOTIFY message that carries the required information is returned to the third-party entity (not shown in the figure).

Note <5>: This embodiment is applicable to the scenario in which all elements in the HOSF set initiate a stream operation to the SAF. The difference is clarified in Note <4> in embodiment 2.1. Compared with the operation request in embodiment 2.1, the operation request in this embodiment is transmitted outside the session corresponding to the first access connection.

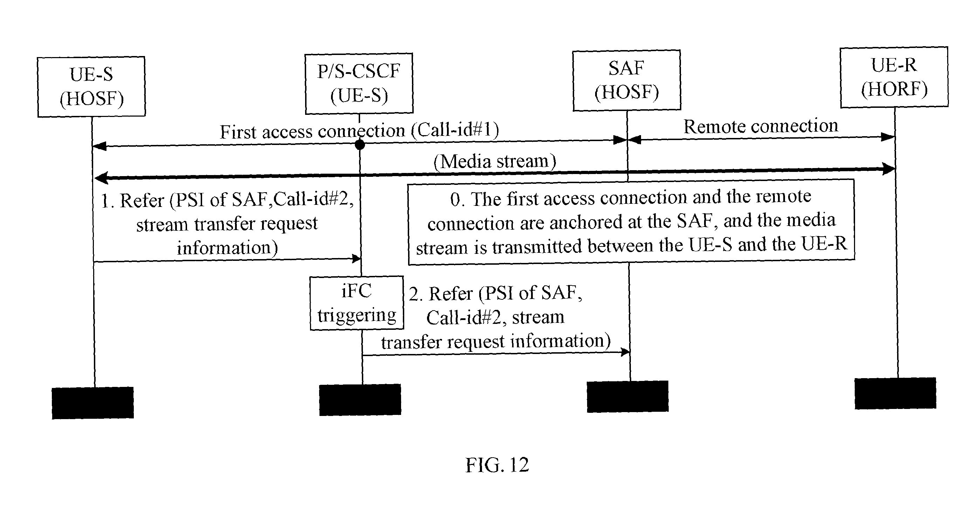

[Embodiment 2.3] This embodiment provides routing of a stream operation request, which is sent by a source end (HOSF) in session-independent mode 2. As shown in FIG. 12, the routing process includes the following steps:
0: The prerequisites are as follows. The signaling plane of the session control between a UE-S and a UE-R has finished anchoring in the SAF of the home IMS network of the source user, and a media stream is exchanged on the bearer between two UEs (Note <1>).
1: The UE-S (HOSF) receives a user indication (Note <2>), and sends an operation request outside the first access connection (for example, a Refer message), where the operation request carries the information required by the stream operation request and the URI of the request may be a PSI of the SAF or another value.
2: After the request is routed to the S-CSCF of the UE-S, the request may be triggered to the SAF as detected according to iFC. The iFC may be configured as any header field (Note <4>) related to the stream operation characteristics in the request.

Note <1>: The figure omits the interaction between the P-CSCF and the S-CSCF, and the entity at the UE-R network side.

Note <2>: For trigger conditions, see Note <2> in embodiment 2.1.

Note <3>: For the carried information required for the stream operation and the carrying mode, see Note <3> in embodiment 2.2.

Note <4>: This routing mode is also applicable to the scenario of routing a request of a third party at the user side or network side (HOCF) to the SAF. For the difference, see Note <4> in embodiment 2.2.

Note <5>: This routing mode is also applicable to the scenario in which all elements in the HOSF set initiate a stream operation to the SAF. For the difference, see Note <5> in embodiment 2.2.

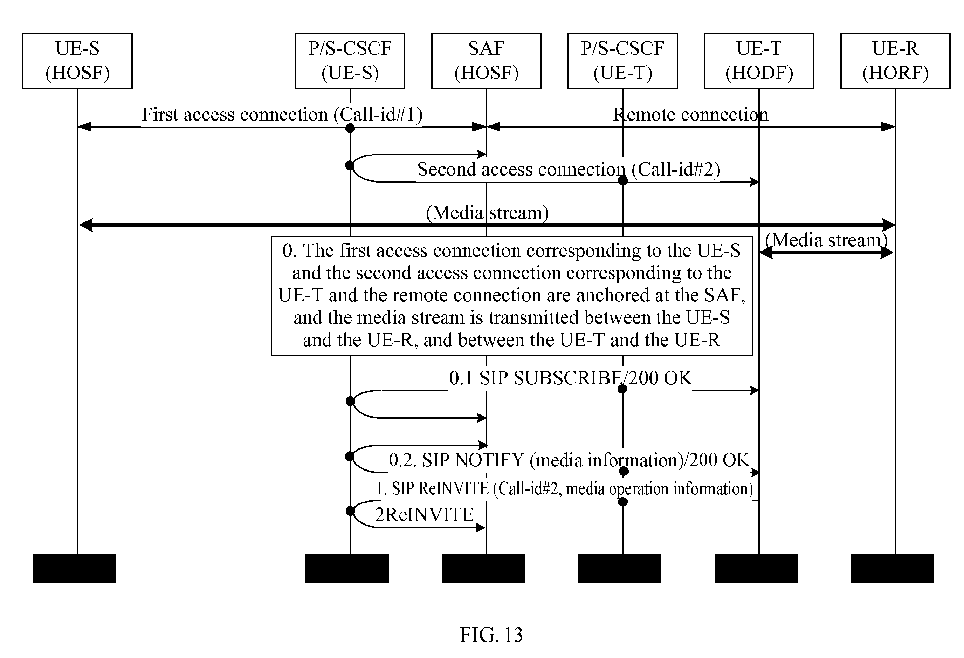

[Embodiment 2.4] This embodiment provides routing of a stream operation request, which is sent by a UE (HODF) at the destination end in session-dependent mode. As shown in FIG. 13, the routing process includes the following steps:
0: The prerequisites are as follows. The session control signaling between the UE-S and the UE-R, and the session control signaling between the UE-T and the UE-R are anchored at the SAF. The media stream is transmitted between the UE-S and the UE-R, and between the UE-T and the UE-R (Note <1>).
0.1: The UE-T where the HODF is located requests to subscribe to the session information of the HOSF. This request is routed to the home network of the HOSF, and then triggered to the SAF of the HOSF for processing.
0.2: After checking the request, the SAF accepts the request and returns information about the call anchored by the HOSF (Note <1.1>).
1: The UE-T (HODF) receives a user indication (Note <2>), and decides to transfer the media stream on the UE-S to an existing session on the UE-T. Therefore, the UE-T sends a stream transfer operation request within the second access connection (the session control connection indicated by Call-id#2). For example, the request is carried in a SIP ReINVITE message. Alternatively, the request is carried in another message such as SIP UPDATE. This message carries the information required by the stream transfer request (Note <3>). The URI of the request may be a PSI of the SAF or another value.
2: The request is routed along the signaling path of the second access connection, passes through the S-CSCF of the UE-S, and is then routed to the SAF for processing.

### (Note <4>)

Note <1>: The figure omits the interaction between the P-CSCF and the S-CSCF, the interaction between the I-CSCFs of different IMS networks, and the entity at the UE-R network side.

Note <1.1>: The HODF obtains the information required for the stream operation. Alternatively, a transfer indication (such as a Refer message) is received from the HOSF or a third party, and the transfer indication carries the required information. The figure supposes that the information is subscribed to, and the subscription request may be sent to the presence server that publishes the HOSF session information. When the HODF and the HOSF are proper, it is not necessary to subscribe to the information.

Note <2>: The condition may be combined with any of the following trigger conditions:
(b) The HODF detects that the strength of the radio signal meets a preset threshold; or
(c) The HODF detects that the time meets a preset value; or
(d) A transfer indication is received from the UE-S (HOSF), a third party at the user side, or an HOCF (the need of transfer of the media stream to an existing session is judged according to whether the transfer destination indication indicates a session, or according to whether the session and the existing session belong to the same remote end based on the information about the remote end of the media stream).

Note <3>: When the HODF sends a stream operation request in the IMS, the request needs to carry at least any combination of the following items:
(a) a stream operation indication: This indication indicates media stream transfer or copying (different from session transfer), and further indicates obtaining of the media stream from the HOSF and sending of the media stream to the HODF. This indication may be a PSI directed to the SAF, or a special stream transfer header field, parameter, or method.
(b) an identifier of the target media stream's component: designed for the SAF to locate the component of the target media stream associated with the anchored first access connection.
(c) an indication of the transfer destination corresponding to the target media stream: The transfer destination corresponding to each target media stream may be an indication addressed to the user identifier, an indication addressed to the UE identifier, or an indication addressed to the next access mode of the UE (not necessarily carried if the operation is transfer or copying of the media stream to the HODF address that sends the transfer request).

Further, the stream operation request may carry any combination of the following items:
(d) a SIP address directed to the SAF, for example, a PSI of the SAF (optional).
(e) an indication of processing in the case of partial operation failure: This indication to the SAF indicates whether to continue processing or return information about failure of the whole media stream operation in the case that some of the transferred media components are operated unsuccessfully.
(f) an operation initiator indication: This indication indicates the source initiator of the stream operation request to the SAF (in the case that the HODF receives an operation indication from another party, the entity that sends the indication triggers the operation).
(g) an indication of processing remaining media components of the source domain: This indication to the SAF indicates processing of the media component in the source domain after completion of operating the media stream. The processing may be: deleting the media component from the corresponding first access connection, or releasing the first access connection of the media component.
(h) an indication of subscribing to relevant events of the transferred media stream: This indication is designed to subscribe to the relevant events of the transferred media stream from the SAF. The relevant events include all events that subsequently occur on the transferred media component, for example, transfer to other destination ends, deletion, and modification.

Such information may be carried in the header field, parameter, method, or message body of a SIP message, or in a specially defined stream operation structure.

When the HODF sends the request in the CS domain, the information in the case of IMS initiation may be mapped in the USSD/SMS.

Note <4>: This routing mode is also applicable to the scenario in which all elements in the HOSF set initiate a stream operation to the SAF, but the carried information further includes:
(i) a stream operation association indication: This indication to the SAF is designed to indicate the association between this request and the operation request of other HODFs. After receiving the indication, the SAF judges whether to wait for the stream operation initiated by the associated HODF before the combination processing. This indication may be carried in a message described in <Note 3>, and its content may be a Boolean indication about whether the association exists, or an indication of other initiators. In this scenario, this embodiment may be combined with embodiment 2.5; that is, the request sent in session-dependent mode and the request sent in session-independent mode may coexist.

Note <5>: When sending a request in the CS network, the HODF may send the request to the CS agent entity through USSD or SMS, where the request carries the foregoing information and the session identifier corresponding to the first access connection. The CS agent entity locates the corresponding session according to the identifier, converts the request content into an IMS format, and, within the located session, sends the request to the SAF for processing (not shown in the figure).

Note <6>: This embodiment supposes that the UE-S and the UE-T corresponding to the HOSF and the HODF belong to different S-CSCFs. In practice, two UEs may belong to the same S-CSCF, or even the HOSF and the HODF belong to different access modes of one UE.

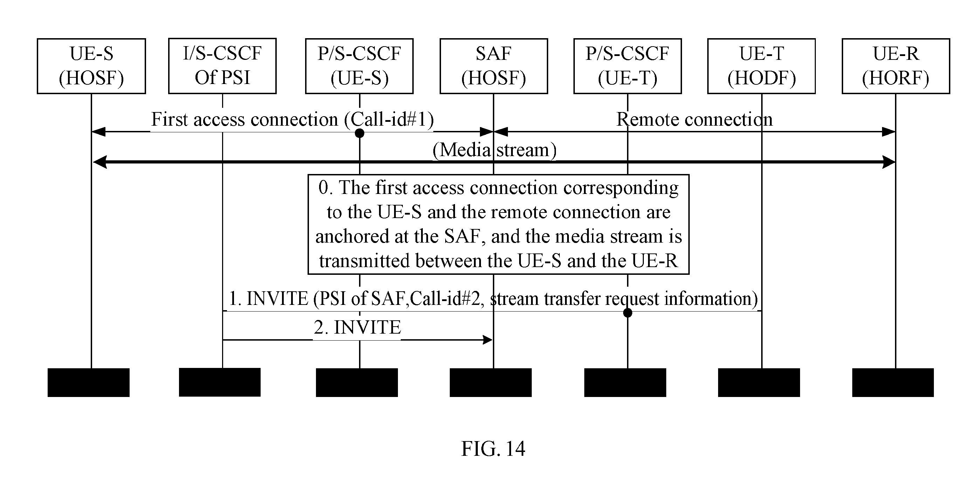

[Embodiment 2.5] This embodiment provides routing of a stream transfer operation request, which is sent by a UE (HODF) at the destination end in session-independent mode. As shown in FIG. 14, the routing process includes the following steps:
0: The prerequisites are as follows. The session control signaling between the UE-S and the UE-R is anchored at the SAF. The media stream is transmitted between the UE-S and the UE-R (Note <1.1>).
1: The UE-T (HODF) receives a user indication (Note <2>), and decides to transfer the media stream on the UE-S to a new session on the UE-T. Therefore, the request for establishing the second access connection (the session control connection indicated by Call-id#2) carries the information required by the stream transfer request. That is, the information required by the stream transfer request is carried in a SIP INVITE message (Note <3>). The URI of the request may be a PSI of the SAF.
2: The request is routed to the I-CSCF of the PSI home network, and, in PSI routing mode, further routed to the SAF for processing (Note <4>)(Note <5>)(Note <6>).

Note <1>: The figure omits the interaction between the P-CSCF and the S-CSCF, the interaction between the I-CSCFs of different IMS networks, and the entity at the UE-R network side.

Note <1.1>: For the method of obtaining the information required for media stream operation, see Note <1.1> in embodiment 2.4.

Note <2>: For trigger conditions, see Note <2> in embodiment 2.4.

Note <3>: For the carried information required for the stream operation and the carrying mode, see Note <3> in embodiment 2.4.

Note <4>: This routing mode is also applicable to the scenario in which all elements in the HOSF set initiate a stream operation to the SAF. For the difference, see Note <4> in embodiment 2.4. Specially, when the HODF sends the request in the CS domain, the information in the case of IMS initiation may be mapped in the USSD/SMS.

Alternatively, if the information is carried in a CS call setup message, the called number is an address routable to the SAF, for example, a PSI of the AS where the SAF is located. The called number is also an indication of stream transfer or copying, or is even associated with a media component in the HOSF in the source domain (the called number is sent from the SAF to the HODF in CS domain mode). Accordingly, the SAF can locate the transferred media component in the first access connection, or judge the corresponding media component in the first access connection according to the media property (bearer capability information <BC> in the CS call) in the CS call (this is applicable to only extreme scenarios; for example, there is only one corresponding component in the whole anchored call).

Note <5>: When sending a request in the CS network, the HODF may send the request to the CS agent entity through USSD or SMS, where the request carries the foregoing information. The CS agent entity converts the request content into an IMS format, and, within the located session, sends the request to the SAF for processing (not shown in the figure).

Note <6>: This embodiment supposes that the UE-S and the UE-T corresponding to the HOSF and the HODF belong to different S-CSCFs. In practice, two UEs may belong to the same S-CSCF, or even the HOSF and the HODF belong to different access modes of one UE. When two UEs belong to the same S-CSCF, the S-CSCF may perform iFC matching according to the stream operation property in the request, and, if the matching succeeds, trigger the request to the SAF for processing.

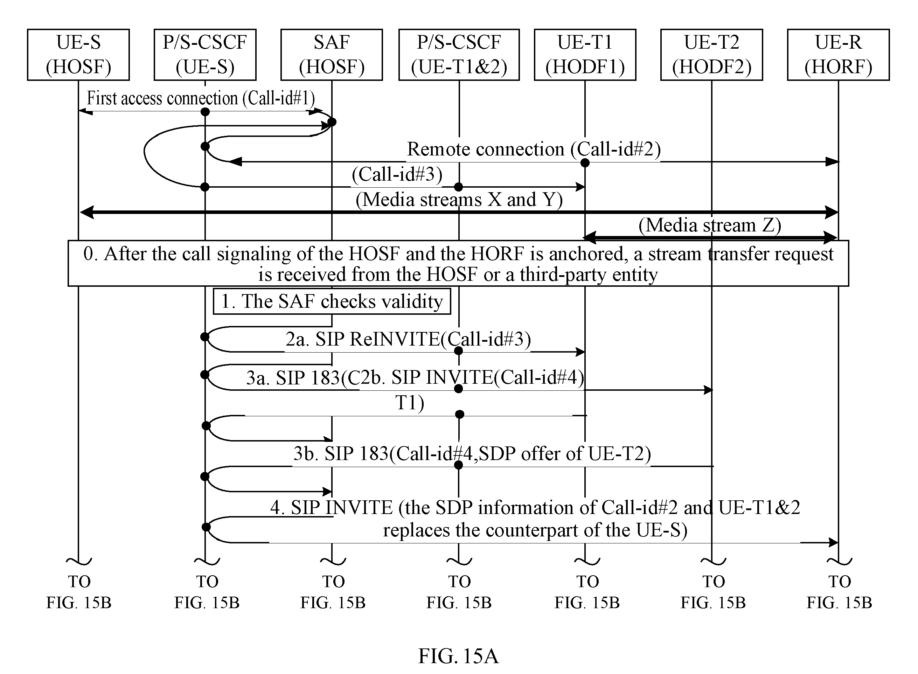

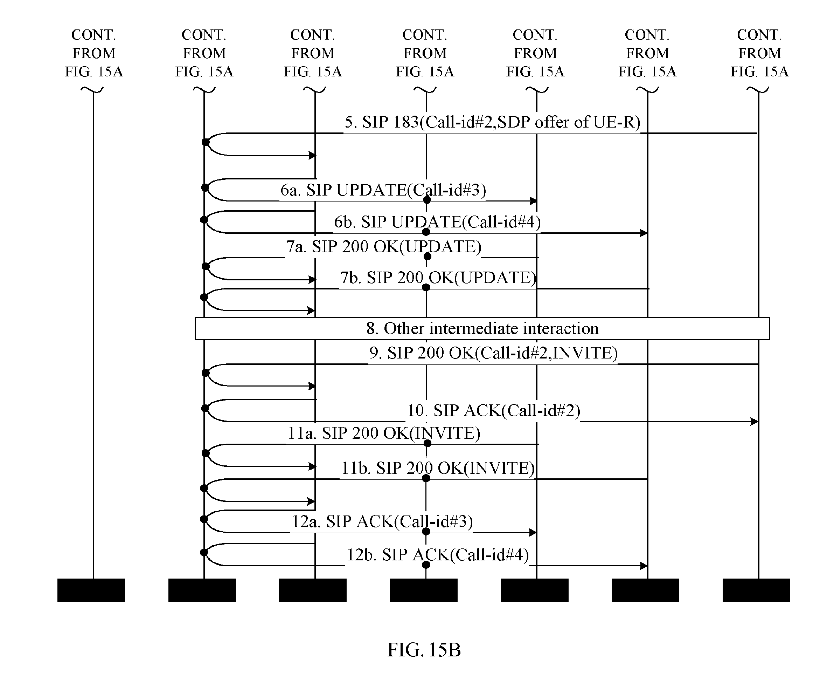

[Embodiment 3.1] This embodiment provides a process of establishing a second access connection and redirecting a media stream, where the SAF sends a request to the HODF. As shown in FIG. 15, the process includes the following steps:
0: The prerequisites are as follows. The session between the UE-S that includes the HOSF and the UE-R that includes the HORF is anchored at the SAF; the first access connection (namely, a session signaling connection between the UE-S and the SAF) is associated with and controls the media components X and Y; the UE-T1 is in a session with the UE-R (is associated with and controls the media component Z); and the session is anchored at the SAF, and the UE-T1 is in a session connection (indicated by call-id#3) with the SAF, and this session and the session between the UE-S and the SAF (indicated by call-id#1) correspond to one remote connection (indicated by call-id#2). By now, the SAF has received the stream operation request sent by the UE-S, the third-party UE, or the HOCF (Note <1>).
1: After receiving the request, the SAF may check validity to judge whether the transfer conditions are fulfilled. For the judgment criteria, see Note <2>.
2a, 2b: The SAF determines that the stream operation request fulfills the conditions. Therefore, according to the transfer operation indicated in the operation request and the indicated destination, the SAF sends a SIP ReINVITE message and a SIP INVITE message to the UE-T1 and the UE-T2, requesting to establish a second access connection which is a session connection between the SAF and the stream operation destination UE (Note <3>). The SAF and the UE-T1 use an existing session (indicated by call-id#3) as the second access connection; the SAF and the UE-T2 establish a new SIP session as the second access connection. Based on the judgment about the user relation between the UE-S and the UE-T2, the request for establishing a new session from the SAF carries an indication that affects the AS invocation (for example, the Route header field of the SIP message sent by the SAF carries a dia-id, which is carried in the header field when the S-CSCF triggers the request to the SAF), or carries the transfer policy configured by the UE-S and the UE-T2 (Note <4>).
3 a, 3b: The UE-T1 and the UE-T2 provide the supported SDP information in the SDP answer.
4, 5: The SAF represents the UE-T1 and the UE-T2 to negotiate media with the UE-R. During this process, the media streams X and Y of the UE-R are redirected to the UE-T1 and the UE-T2 (Note <5>).
6a, 6b, 7a, 7b: The SAF forwards the SDP information of the UE-R to the UE-T1 and the UE-T2.
8: The intermediate interaction process, for example, exchange of the messages such as 180 and PRACK, is omitted here.
9, 10: The SAF negotiates media streams with the UE-R (through a message such as UPDATE).
11a, 11b, 12a, 12b: The SAF works with the UE-T1 and the UE-T2 to establish a second access connection, and media components X and Y are added to and associated with the second access connection (Note <6>). For the process of releasing the media stream associated with the first access connection, see embodiment 4.

Note <1>: This embodiment supposes that the media streams X and Y are on the same UE-S, but in practice, they may be on different UEs. The stream operation request is routed to the SAF for processing, and the routing mode may be any combination of the modes in embodiment 2.1, embodiment 2.2, and embodiment 2.3.

Note (2): The validity check includes but is not limited to:
E1: checking whether the UE-S has subscribed to the media stream operation service;
E2: checking whether the media operation type is allowed;
E3: checking whether the network is able to locate the transferred media stream;
E4: checking whether the UE-T identifier is in a valid format, or whether the UE-T identifier is allowed when it is valid;
E5: checking whether the operator policy allows the operation; and
E6: checking whether the session state corresponding to the first access connection allows the operation (for example, the operation is allowed only if the session state of the media stream is active);
or any combination thereof.

When the SAF determines that the stream operation request does not fulfill the conditions, the SAF returns a failure response to the initiator of the request, for example, sends a SIP 400 message, a SIP 500 message, or a SIP 600 message, which carries a cause value corresponding to the check item (not shown in the figure).

Note <3>: The second access connection may be an existing session connection between the destination end and the SAF, or a new session connection established between the destination end and the SAF, or both connection types are applied. This embodiment supposes that both connection types are applied.

Note <4>: When the second access connection is a newly established session, the SAF judges the relation between the UE-S and the UE-T2, and defines these as a group, for example: different UEs that use the same IMPU, UEs that use different IMPUs but belong to the same subscription relation (different public identifiers of the user), or numbers that belong to the same user but belong to different operator networks. The UEs in a group share the data such as policies configured by the users, and the stream operation requests of such users can be fulfilled through only one attempt of invoking the SAF. Therefore, the session setup request may carry an indication of not triggering other ASs. In this way, it is ensured that only one SAF processes the stream operation indication. For example, the stream operation indication is carried in a header field, method, parameter, or message body of a SIP message.

Alternatively, when the source end or the destination end of the stream operation does not comply with the foregoing group definition, the SAF may send a session setup request that carries the stream operation policy configured at the UE-S. When the second SAF is triggered in the session setup process, this policy can be stored. When the second SAF receives a request for operating an associated media stream on the connection where the second SAF is located, the request may be processed according to such policies. The policies include but are not limited to:
a policy configured by a UE-S user in the SAF, namely, forbidding a destination UE user or a third party specified by a destination user from transferring a media stream back to the source end after the media stream is transferred out;
a policy configured by a UE-S user in the SAF, namely, forbidding a destination UE user, or a third party specified by a destination user, or a second destination end specified by a destination user from transferring a media stream to the second destination end after the media stream is transferred out;
a policy configured by a UE-S user in the SAF, namely, overriding a restriction of the source user, where the restriction is: forbidding transfer of a media stream back to the source end after the media stream is transferred out; and
a policy configured by a UE-S user in the SAF, namely, overriding a restriction of the source user, where the restriction is: forbidding transfer of a media stream to a second destination end after the media stream is transferred out.

Such policies may be carried in any message sent from the SAF to the UE-T2.

Likewise, the second SAF may also receive the media stream operation policies configured by the UE-T2, and such policies are carried in any message sent by the UE-T2 to the SAF. The policies include but are not limited to:
a policy configured by a destination user in the second SAF, namely, forbidding a source user or a third party specified by a source user from transferring a media stream back to the source end after the media stream is transferred in;
a policy configured by a destination user in the second SAF, namely, forbidding a source user, or a third party specified by a source user, or a second destination end specified by the source end from transferring a media stream to the second destination end after the media stream is transferred in;
a policy configured by a destination user in the second SAF, namely, overriding a restriction of the destination user, where the restriction is: forbidding transfer of a media stream back to a source end after the media stream is transferred in; and
a policy configured by a destination user in the second SAF, namely, overriding a restriction of the destination user, where the restriction is: forbidding transfer of a media stream to a second destination end after the media stream is transferred in.

Note <5>: The SAF controls the association between the second access connection and the remote connection; that is, the SAF provides the session signaling interaction between the second access connection and the remote connection, and therefore, the target media stream is associated with the second access connection and the remote UE, and the media stream is redirected to the UE of the HODF, as shown in steps 2a-12b. The sequence of exchanging messages in this embodiment is adjustable.

Note <6>: This embodiment supposes that the UE-S and the UE-T1&2 corresponding to the HOSF and the HODF belong to different S-CSCFs. In practice, two UEs may belong to the same S-CSCF, or even the HOSF and the HODF belong to different access modes of one UE.

The process illustrated in this embodiment is only a preferred solution. In practice, the sequence of exchanging messages may be adjusted and certain steps may be added or deleted, without departing from the spirit of the present invention.

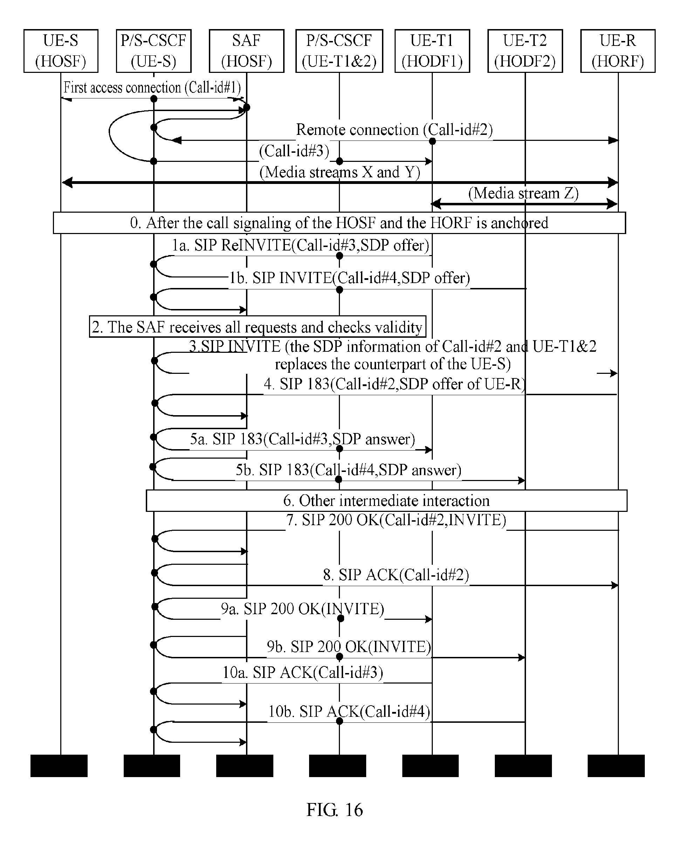

[Embodiment 3.2] This embodiment provides a process of establishing a second access connection and redirecting a media stream, where the HODF sends a request to the SAF. As shown in FIG. 16, the process includes the following steps:
0: The prerequisites are as follows. The session between the UE-S that includes the HOSF and the UE-R that includes the HORF is anchored at the SAF; the first access connection (namely, a session signaling connection between the UE-S and the SAF) is associated with and controls the media components X and Y; the UE-T1 is in a session with the UE-R (is associated with and controls the media component Z); and the session is anchored at the SAF, and the UE-T1 is in a session connection (indicated by call-id#3) with the SAF, and this session and the session between the UE-S and the SAF (indicated by call-id#1) correspond to one remote connection (indicated by call-id#2). (Note <1>)
1a, 1b: The UE-T1 uses an existing session connection (call-id#3) as a second access connection, and sends a ReINVITE message on the second access connection, where the message carries the supported media information and the associated media indication; the UE-T2 establishes a new session connection (call-id#4) as a second access connection, and the INVITE message sent to the SAF also carries the supported media information and associated media indication (Note <2>). At the time of establishing a new session, the message carries an indication that affects AS invocation, or carries the transfer policies configured by the UE-S and UE-T2 users. (Note <3>)
2: The SAF receives all transfer requests according to the association indication, and judges whether the stream operation request fulfills conditions (Note <4>).
3, 4, 5a, 5b: The SAF represents the UE-T1 and the UE-T2 to negotiate media with the UE-R. During this process, the media streams X and Y of the UE-R are redirected to the UE-T1 and the UE-T2 (the message for media negotiation may be UPDATE, and so on).
6: The intermediate interaction process, for example, exchange of the messages such as 180 and PRACK, is omitted here.
7, 8, 9a, 9b, 10a, 10b: The SAF represents the UE-T1 and the UE-T2 to negotiate media streams with the UE-R. By now, the SAF, the UE-T1, and the UE-T2 have established a second access connection, and media components X and Y have been added to and associated with the second access connection. For the process of releasing the media stream associated with the first access connection, see embodiment 4.

Note <1>: This embodiment supposes that the media streams X and Y are on the same UE-S. In practice, they may belong to different UEs.

Note <2>: This embodiment supposes that the destination end sends the request at the same time. In practice, it is possible that only one end (such as the UE-T or UE-T2) sends the request.

For the process of triggering a request and routing the request to the SAF, see embodiment 2.4 and embodiment 2.5.

The second access connection may be established through an existing session connection between the destination end and the SAF, or through a new session connection established between the destination end and the SAF, or through both of them. This embodiment supposes that the second access connection is established through both of them.

The median association indication may be carried in a header field, method, parameter, or message body of a SIP message.

Note <3>: For the content of such indications and policies, and the occasion and the mode of carrying the indications, see Note <4> in embodiments 3.1.

Note <4>: For the method of checking whether the stream operation conditions are fulfilled, see Note <2> in embodiment 3.1.

Note <5>: This embodiment supposes that the UE-S and the UE-T1&2 corresponding to the HOSF and the HODF belong to different S-CSCFs. In practice, two UEs may belong to the same S-CSCF, or even the HOSF and the HODF belong to different access modes of one UE.

The process illustrated in this embodiment is only a preferred solution. In practice, the sequence of exchanging messages may be adjusted and certain steps may be added or deleted, without departing from the spirit of the present invention.

Note <6>: The SAF controls the association between the second access connection and the remote connection; that is, the SAF provides the session signaling interaction between the second access connection and the remote connection, and therefore, the target media stream is associated with the second access connection and the remote UE, and the media stream is redirected to the UE of the HODF, as shown in steps 1a-10b. The sequence of exchanging messages in this embodiment is adjustable.

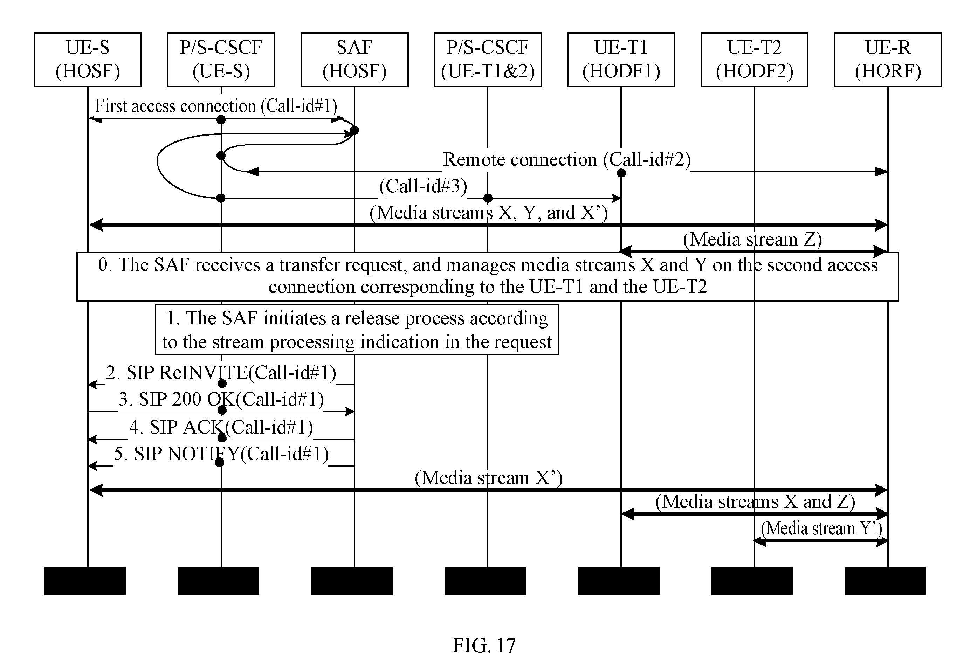

[Embodiment 4] This embodiment provides a process of releasing the media steam associated with the first access connection, where the SAF sends an operation request. As shown in FIG. 17, the process includes the following steps:
0: The prerequisites are as follows. The session between the UE-S that includes the HOSF and the UE-R that includes the HORF is anchored at the SAF; the first access connection (namely, a session signaling connection between the UE-S and the SAF) is associated with and controls the media components X, X' and Y; the UE-T1 is in a session with the UE-R (is associated with and controls the media component Z); and the session is anchored at the SAF, and the UE-T1 is in a session connection (indicated by call-id#3) with the SAF, and this session and the session between the UE-S and the SAF (indicated by call-id#1) correspond to one remote connection (indicated by call-id#2). By now, the SAF has received the operation request which requests to transfer the media streams X and Y to the UE-T1 and the UE-T2 respectively, and has added and associated the media streams X and Y on the second access connection corresponding to the UE-T1 and the UE-T2 (Note <1>).
1: The SAF releases the target media stream associated with the first access connection according to the indication of processing media components of the source domain in the stream operation request (Note <2>).
2: In this embodiment, this indication is: releasing the media components of the source domain; and the SAF releases media components X and Y by sending a media negotiation request in the session connection corresponding to the first access connection (Note <3>).
3, 4: The negotiation process is completed, and the media components X and Y in the first access connection are released (Note <4>), Note <5>).
5: If the SAF previously receives a subscription indication from the stream operation initiator (for example, the UE-S), the SAF sends a notification to the subscriber after completion of the stream operation (Note <6>).

Note <1>: This embodiment supposes that the media streams X and Y are on the same UE-S, but in practice, they may be on different UEs. For sending of the stream operation request, see embodiments 1.1-1.5; for the process of establishing the second access connection and associating the corresponding media, see embodiment 3.1 and embodiment 3.2.

Note <2>: This embodiment supposes that an indication of processing media components of the source domain in the stream operation request is received, but in practice, the processing may be based on the default processing policy in the network.

The processing indication may also be "releasing the whole first access connection", and in this case, the SAF releases the session corresponding to the first access connection; or, if the associated media stream in the first access connection is retained, no further processing is performed.

The indication of processing media components of the source domain may be carried in a header field, method, parameter, or message body of a SIP message.

Note <3>: Media negotiation may also be performed through another message such as SIP UPDATE.

Note <4>: This embodiment supposes that the UE-S and the UE-T1&2 corresponding to the HOSF and the HODF belong to different S-CSCFs. In practice, two UEs may belong to the same S-CSCF, or even the HOSF and the HODF belong to different access modes of one UE.

Note <5>: After completion of the transfer, the UE-S, the UE-T1, the UE-T2, or a third-party entity may use the method in embodiments 1-3 to request the SAF to initiate subsequent transfer; or, if the second SAF is inserted at the time of establishing the second access connection, such entities may request the second SAF (the request initiator uses the address of the second SAF as the address of the media operation request) to transfer the media stream associated with the second access connection (not shown in the figure).

Note <6>: The notification content includes: success or failure of transfer, destination end of media transfer, and identifier at the SAF after transfer; and the notification may also be transmitted through USSD or SMS in the CS network.

If the HOSF has subscribed to the event of transfer of media components in the session, when another party such as an HODF or a third-party entity initiates transfer of the media component in the session successfully, the SAF may send a notification to the HOSF. The contents of the notification include: information about the transfer initiator, information about the transfer destination party, and the transferred media component.

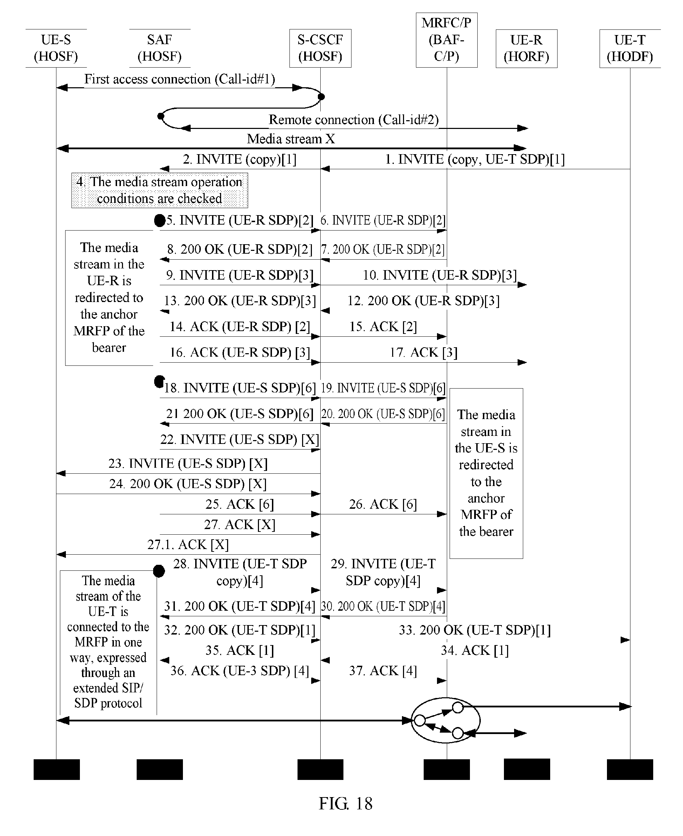

[Embodiment 5] This embodiment provides a process of copying a media stream, where the operation request is sent by the destination end. As shown in FIG. 18, the process includes the following steps:
0: The prerequisites are as follows. The session between the UE-S of the HOSF and the UE-R of the HORF has been anchored at the SAF, and the first access connection (namely, the session signaling connection between the UE-S and the SAF) is associated with and controls the media component X (Note <1>).

The copying process (the MRFC corresponds to the BAF-C, and the MRFP corresponds to the BAF-U) is:
1, 2: The UE-T establishes a second access connection by initiating setup of a session with the SAF, and requests to copy a media stream (Note <2>).
4: After receiving the request, the SAF may check the media operation conditions as required (Note <3>).
5-17: The SAF negotiates media with the UE-R, and with the MRFC. In this way, the UE-R redirects the media stream X to the bearer anchor BAF-U (MRFP). The interaction between the MRFC and the MRFP is covered in the prior art, and not described here further.
18-27.1: The SAF negotiates media with the UE-S, and with the MRFC. In this way, the UE-S redirects the media stream X to the bearer anchor BAF-U (MRFP). The interaction between the MRFC and the MRFP is covered in the prior art, and not described here further. The bearer connection is anchored (the bearer of the media stream X is anchored to the MRFP).
28, 29: The SAF instructs the MRFC to perform the copying operation (Note <4>).
30-37: The SAF and the UE-S finish establishing the second access connection, and associate the copied media stream X. Now, the media component X is copied to the UE-T (Note <5>).

Note <1>: This embodiment supposes that the media streams X is on the same UE-S. In practice, multiple media streams may belong to different UEs in the copying process.

Note <2>: This embodiment supposes that the UE-T initiates a stream operation request. The initiation mode and the routing mode in embodiments 2.1-2.5 are also applicable to this embodiment. This embodiment supposes that the direction is from the UE-T to the SAF in the process of establishing the second access connection and associating the corresponding media stream, but the mode in embodiment 3.2 is also applicable.

Note <3>: For the method of checking whether the stream operation conditions are fulfilled, see Note <2> in embodiment 3.1.

Note <4>: The stream copying operation may be indicated by an Extensible Markup Language (XML) in a SIP request. The SAF may be combined with the MRFC, and in this case, the internal interaction is applicable, and the SIP interaction between the SAF and the MRFC is not required.

More specifically, after receiving a copying indication, the MRFC requests the conference resources on the MRFP, connects the media bearers of the media interaction parties (the UE-S, the UE-T, and the UE-R) to the conference resources (namely, redirects the media bearers to the MRFP), and modifies the direction of media transmission between the UE-T and the MRFP (so that the media stream is transmitted from the MRFP to the UE-T unidirectionally), thus copying the media stream. The sequence of operations above is only a preferred example. This embodiment supposes that the media stream is copied from the UE-R to the UE-S, and the media stream may also be copied from the UE-R and the UE-S to the UE-T in two directions.

"The SAF working with the MRFC (BAF-C)" here means that the SAF represents the UE-S (HOSF) and the UE-R (HORF) to negotiate media with the BAF-C, thus redirecting the media stream of the UE-S and the UE-R to the BAF-U and anchoring the call in the BAF-U media bearer connection.

Note <5>: The process illustrated in this embodiment is only a preferred solution. In practice, the sequence of exchanging messages may be adjusted, without departing from the spirit of the present invention.

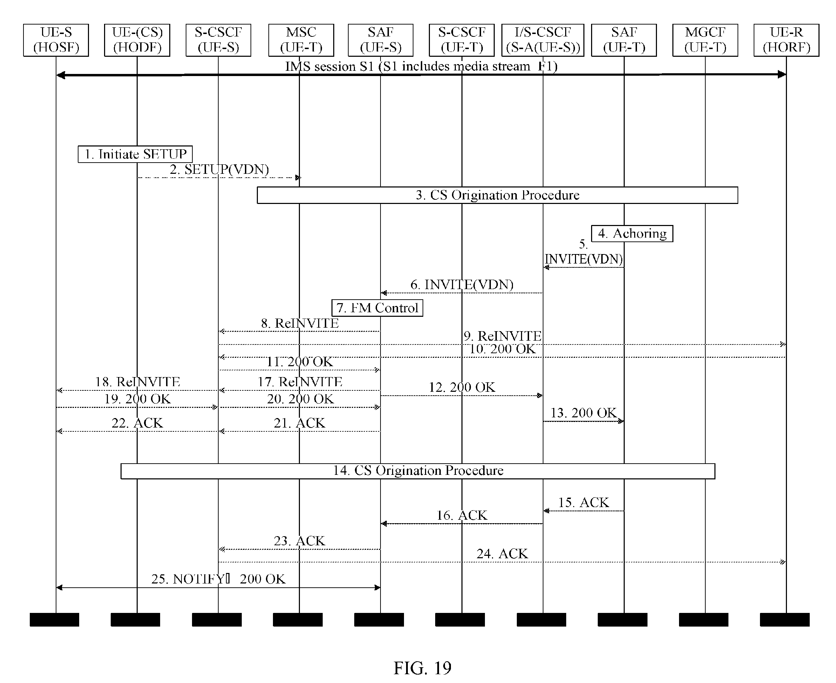

Embodiment 6: The UE-T (CS) uses the existing capabilities of the CS network to transfer the voice media stream between the UE-S and the UE-R to a new session on the UE-T (CS). That is, the UE-T (CS) initiates transfer in the CS domain. As shown in FIG. 19, the process includes the following steps:
1-6: A CS-domain UE or a CS-domain mode UE-T (CS) of a multi-mode UE decides to initiate stream transfer according to a user indication, a network indication or preset conditions. A CS session setup request (or known as a transfer request) is generated, with the special PSI of the SAF (UE-S) being used as a request destination. In a mode similar to VCC, the session setup request is routed to the SAF (UE-T) for anchoring, and then sent to the SAF (UE-S) along the signaling path of establishing the session.
   Note:
   <1> After the anchoring is performed at the SAF (UE-T), the session setup request sent to the SAF (UE-S) may include the policy of the UE-T (CS) (or user) controlling the transfer. One of the following policies is applied:
      a policy configured by a destination user in the SAF (UE-T), namely, forbidding a source user or a third party specified by a source user from transferring a media stream back to the source end after the media stream is transferred in;
      a policy configured by a destination user in the SAF (UE-T), namely, forbidding a source user, or a third party specified by a source user, or a second destination end specified by the source end from transferring a media stream to the second destination end after the media stream is transferred in;
      a policy configured by a destination user in the SAF (UE-T), namely, overriding a restriction of the destination user, where the restriction is: forbidding transfer of a media stream back to a source end after the media stream is transferred in; and
      a policy configured by a destination user in the SAF (UE-T), namely, overriding a restriction of the destination user, where the restriction is: forbidding transfer of a media stream to a second destination end after the media stream is transferred in.
   <2> When the anchoring is performed at the SAF (UE-T), one of the following transfer control policies may be executed:
      a policy configured by a destination user in the SAF (UE-T), namely, forbidding transfer of a source-end media stream to the local end, with the destination end having no overriding right; and
      a policy configured by a destination user in the SAF (UE-T), namely, forbidding transfer of a source-end media stream to the local end, with the destination end having an overriding right.
7-24: After receiving the foregoing session setup request, the SAF (UE-S) determines that the request is a transfer request according to the special PSI in the session setup request, and then checks validity of the transfer request. The SAF (UE-S) determines the transferred media stream after the Bearer Capability (BC) value in the ISUP IAM is converted into the corresponding SDP parameters (audio and/or video streams) in the corresponding SIP session setup request in the MGCF. After the validity check succeeds, the SAF (UE-S) and the UE-R perform re-negotiation (according to the IMS/SIP negotiation process) to redirect the transferred media stream to the UE-T (CS). The SAF (UE-S) and the UE-S perform re-negotiation to delete the transferred media stream in the session that involves the transferred media stream.
   Note:
   <1> The SAF (UE-S) may determine the transferred media stream according to the special PSI in the following mode:
      The special PSI is a transfer indication and is associated with a specific user or a specific UE (UE-S), or is associated with a session under a specific user or UE, or is associated with several specific media streams of the specific session. If the special PSI is associated with a specific UE, it is necessary to specify that the user or the UE includes only one specific audio stream or video stream, or includes only one active video stream and/or audio stream, and then the SAF (UE-S) can determine the transferred media stream according to the SDP information in the transfer request.
   <2> The validity check may further include:
      a policy configured by a source user in the SAF (UE-S), namely, forbidding the destination end from transferring an existing media stream out of the source end, with the destination end having no overriding right; or
      a policy configured by a source user in the SAF (UE-S), namely, forbidding the destination end from transferring an existing media stream out of the source end, with the destination end having an overriding right.
   <3> If the validity check fails, the SAF (UE-S) returns a failure response to the UE-T (CS). The response may carry a cause for transfer failure.
   <4> Possible processing modes of the source end include: setting a default operation. For example, the default operation is to delete only the transferred media stream, or release the session that involves the transferred media stream; or the special PSI is associated with the source-end processing; for example, a type indicates deletion of the transferred media stream, and a type indicates release of the session that involves the transferred media stream.
25: After completion of transfer, the SAF (UE-S) sends a NOTIFY request that carries a transfer result to the UE-S.
   Note:
   <1> The NOTIFY request sent by the SAF (UE-S) to the UE-S carries an indication of transfer success. The NOTIFY request may further carry the identifier of the transferred media before transfer, the identifier of the transferred media after transfer (if this media identifier is global, the NOTIFY request needs to carry only either of identifiers), the identifier of the transfer initiator, the identifier of the transfer destination, the identifier of the transfer processing entity, or the identifier of the session that involves the media stream after transfer, or any combination thereof.

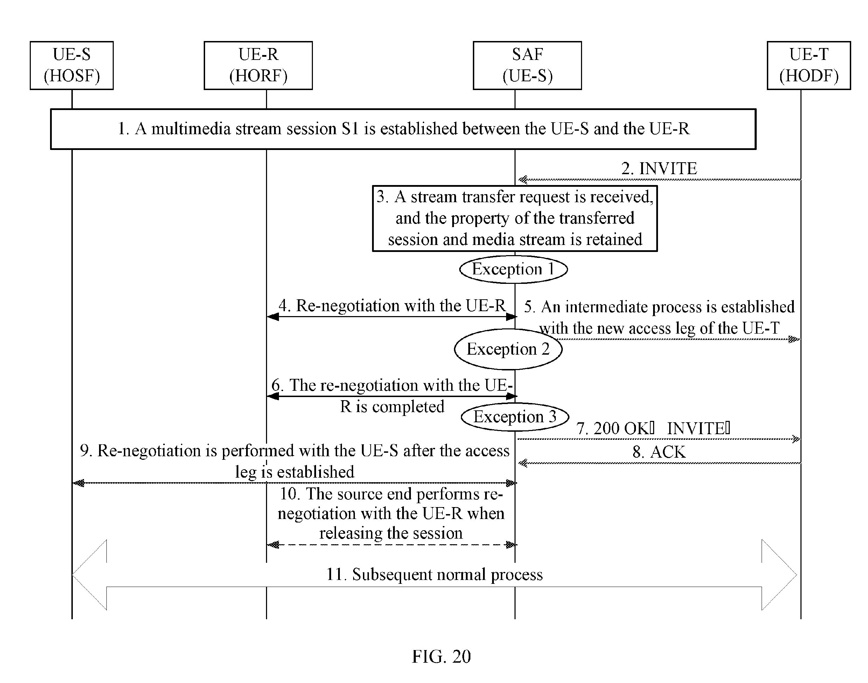

Embodiment 7: This embodiment provides a process of handling exceptions when a media stream is transferred from a UE-S to a new session of a UE-T in C2N mode. As shown in FIG. 20, the process includes the following steps:
1: A multimedia session is established between the UE-S and the UE-R, and the transfer initiator has obtained information required for transfer, and, if the transfer initiator is a UE-S or a third-party UE or an HOCF, the transfer request is sent from the foregoing entity to the UE-T.
2-3: The UE-T transmits the transfer request (session setup request) along the signaling path to the SAF (UE-S), and the SAF (UE-S) retains the information about the session that involves the transferred media stream.

### Exception 1:

<1> Before re-negotiating with the UE-R, the SAF (UE-S) receives from the UE-R a request for deleting the transferred media stream, and therefore cancels the session setup request sent by the UE-T, where the cancellation request carries the cause for transfer failure, and performs the corresponding process according to the request for deleting the media stream; or
<2> Before re-negotiating with the UE-R, the SAF (UE-S) receives from the UE-R a request for modifying the receiving address of the transferred media stream or a request for modifying the media format, and therefore cancels the session setup request sent by the UE-T, where the cancellation request carries the cause for transfer failure, and performs the corresponding process according to the request for modifying the receiving address of the media or the request for modifying the media format; or the SAF (UE-S) negotiates with the UE-R and the UE-T according to the modified media stream property to implement transfer; or
<3> Before re-negotiating with the UE-R, the SAF (UE-S) receives from the UE-R a request for releasing the session that involves the transferred media stream, and therefore cancels the session setup request sent by the UE-T, where the cancellation request carries the cause for transfer failure, and performs the corresponding process according to the request for releasing the session.
4-6: If exception 1 does not occur, the SAF (UE-S) performs re-negotiation with the UE-R, and redirects the media stream to the UE-T.

### Exception 2:

<1> While the SAF (UE-S) performs re-negotiation with the UE-R, if the session setup initiated by the UE-T fails, the SAF (UE-S) cancels the re-negotiation with the UE-R.

### Exception 3:

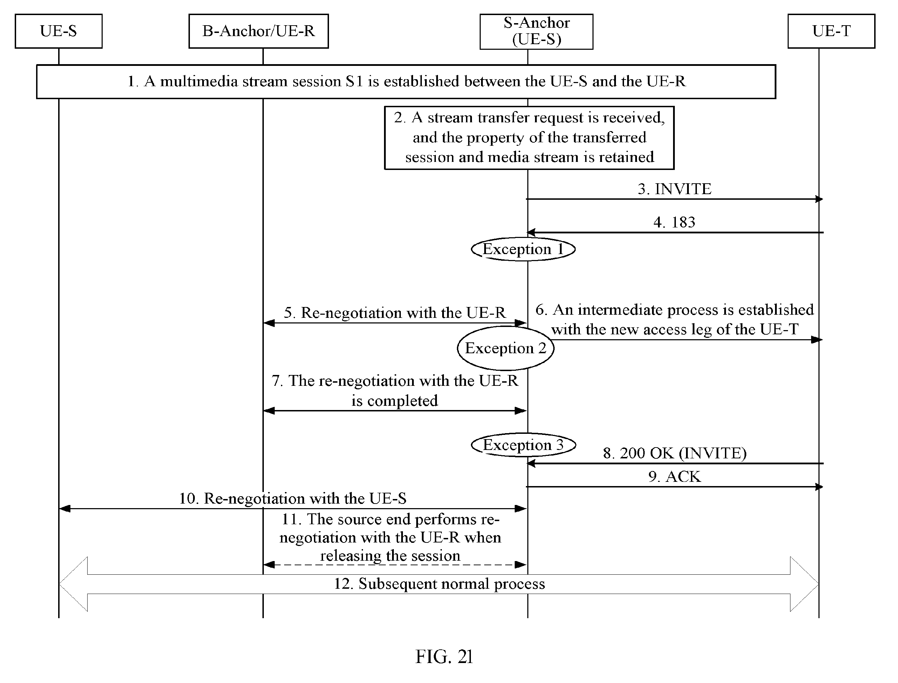

<1> Upon completion of re-negotiation with the UE-R, the SAF (UE-S) receives from the UE-R a request for deleting the transferred media stream, and therefore cancels the session setup request sent by the UE-T, where the cancellation request carries the cause for transfer failure, and performs the corresponding process according to the request for deleting the media stream; or
<2> Upon completion of re-negotiation with the UE-R, the SAF (UE-S) receives from the UE-R a request for modifying the receiving address of the transferred media stream or a request for modifying the media format, and therefore cancels the session setup request sent by the UE-T, where the cancellation request carries the cause for transfer failure, and performs the corresponding process according to the request for modifying the receiving address of the media or the request for modifying the media format; or the SAF (UE-S) negotiates with the UE-R and the UE-T according to the modified media stream property to implement transfer; or
<3> Upon completion of re-negotiation with the UE-R, the SAF (UE-S) receives from the UE-R a request for releasing the session involving the transferred media stream, and therefore, cancels the session setup request sent by the UE-T, where the cancellation request carries the cause for transfer failure, and performs the corresponding process according to the request for releasing the session; or
<4> Upon completion of re-negotiation between the SAF (UE-S) and the UE-R, if the session setup initiated by the UE-T fails, the SAF (UE-S) uses the stored media stream information and uses another re-negotiation request to recover the access leg between the SAF (UE-S) and the UE-R to the state prior to the transfer.
7-11. If neither exception 1 nor exception 2 occurs, the UE-T goes on with the session setup request process initiated by the UE-T, and performs re-negotiation with the UE-S and sends a notification to the UE-S according to the normal process (this embodiment emphasizes exception handling, and the normal processing is not detailed here).
   Embodiment 8: This embodiment provides a process of handling exceptions when a media stream is transferred from a UE-S to a new session of a UE-T in N2C mode. As shown in FIG. 21, the process includes the following steps:
   1-2: A multimedia session is established between the UE-S and the UE-R, and the transfer initiator has obtained information required for transfer, and, if the transfer initiator is a UE-S, a UE-T, a third-party UE, or an HOCF, the transfer request is sent from the foregoing entity to the SAF (UE-S), and the SAF (UE-S) retains the information about the session that involves the transferred media stream.
3-4: The SAF (UE-S) checks validity of the received transfer request successfully, delivers a session setup request to the UE-T. The session setup request carries the property of the transferred media stream, and the UE-T returns a 183 response.
   Exception 1:
   <1> Before re-negotiating with the UE-R, the SAF (UE-S) receives from the UE-R a request for deleting the transferred media stream, and therefore cancels the session setup request sent by the SAF (UE-S) to the UE-T, performs the corresponding process according to the request for deleting the media stream, and then sends a notification that carries the transfer failure cause to the transfer requester; or
   <2> Before re-negotiating with the UE-R, the SAF (UE-S) receives from the UE-R a request for modifying the receiving address of the transferred media stream or a request for modifying the media format, and therefore cancels the session setup request sent by the SAF (UE-S) to the UE-T, performs the corresponding process according to the request for modifying the receiving address of the media stream or the request for modifying the media format, and then sends a notification that carries the transfer failure cause to the transfer requester; or
   <3> Before re-negotiating with the UE-R, the SAF (UE-S) receives from the UE-R a request for releasing the session involving the transferred media stream, and therefore cancels the session setup request sent by the SAF (UE-S) to the UE-T, and performs the corresponding process according to the request for releasing the session; or
   <4> Before the SAF (UE-S) performs re-negotiation with the UE-R, if the session setup request sent to the UE-T fails, the SAF (UE-S) sends a notification that carries the transfer failure cause to the transfer requester.
5-7: If exception 1 does not occur, the SAF (UE-S) performs re-negotiation with the UE-R, and redirects the media stream to the UE-T.
   Exception 2:
   <1> While the SAF (UE-S) performs re-negotiation with the UE-R, if the session setup between the SAF (UE-S) and the UE-T fails, the SAF (UE-S) cancels the re-negotiation with the UE-R, and sends a notification that carries the transfer failure cause to the transfer requester.
   Exception 3:
   <1> After completion of re-negotiation with the UE-R, the SAF (UE-S) receives from the UE-R a request for deleting the transferred media stream, and therefore cancels or releases the session setup request sent by the SAF (UE-S) to the UE-T according to the state of establishing the session with the UE-T, performs the corresponding process according to the request for deleting the media stream, and then sends a notification that carries the transfer failure cause to the transfer requester; or
   <2> Upon completion of re-negotiation with the UE-R, the SAF (UE-S) receives from the UE-R a request for modifying the receiving address of the transferred media stream or a request for modifying the media format, and therefore cancels or releases the session setup request sent by the SAF (UE-S) to the UE-T according to the state of establishing the session with the UE-T, performs the corresponding process according to the request for modifying the receiving address of the transferred media stream or the request for modifying the media format, and sends a notification that carries the transfer failure cause to the transfer requester; or the SAF (UE-S) negotiates with the UE-R and the UE-T according to the modified media stream property to implement transfer; or
   <3> After completion of re-negotiation with the UE-R, the SAF (UE-S) receives from the UE-R a request for releasing the session involving the transferred media stream, and therefore cancels or releases the session setup request sent by the SAF (UE-S) to the UE-T according to the state of establishing the session with the UE-T, performs the corresponding process according to the request for releasing the session, and then sends a notification that carries the transfer failure cause to the transfer requester; or
   <4> Upon completion of re-negotiation between the SAF (UE-S) and the UE-R, if the session setup between the SAF (UE-S) and the UE-T fails, the SAF (UE-S) uses the stored media stream information and uses another re-negotiation request to recover the access leg between the SAF (UE-S) and the UE-R to the state prior to the transfer.
8-12: If none of exceptions 1, 2 and 3 occurs, the SAF (UE-S) and the UE-T go on with the session setup request sent to the UE-T, and perform re-negotiation with the UE-S and send a notification to the UE-S according to the normal process (this embodiment emphasizes exception handling, and the normal processing is not detailed here).

In conclusion, a method for processing continuity of media streams in a session in an embodiment of the present invention includes: an SAF between a set of first access connections and a remote connection corresponding to an HORF is provided, where each first access connection corresponds to an HOSF in an HOSF set in a session and is associated with at least one target media stream; the SAF associates a media component corresponding to the target media stream with a second access connection between the SAF and each HODF in an HODF set after the SAF receives a stream operation request; and the SAF performs stream operations on the second access connection and processes continuity of the target media stream.

Based on the foregoing method, solutions in various scenarios are provided, including: solutions to processing different stream operation requests, mode of sending a stream operation request, mode of using and establishing a second access connection, selection criteria applied when the second access connection for reuse coexists, solutions to other problems that occur in the process of establishing the second access connection, solution to releasing the first access connection, solution to selecting the SAF in the subsequent transfer or copying, and solutions to copying the media stream, and so on. The solutions under the present invention support the stream continuity operation for the CS-domain UEs that lack the IMS capability, and support the stream continuity operation for the CS-domain UEs that have the IMS capability. In order for the network operator to improve the QoS, the embodiments of the present invention exercise more detailed control for the continuity of the media streams of the user. The method under the present invention fulfills the requirements for processing continuity of media streams in a session.

An SAF provided in an embodiment of the present invention includes: a triggering unit, a receiving unit, an associating unit, and a media stream processing unit. The SAF processes the continuity of media streams in a session properly.

A system for processing continuity of media streams in a session in an embodiment of the present invention includes: an HOSF set, an HODF set, an HORF, and an SAF. The embodiments of the present invention fulfill the requirements for processing continuity of media streams in a session.

It is apparent that those skilled in the art can make modifications and variations to the present invention without departing from the spirit and scope of the present invention. The present invention is intended to cover the modifications and variations provided that they fall in the scope of protection defined by the following claims or their equivalents.

## Claims

1. A method for processing continuity of media streams in a session, comprising:
providing a session control Signaling-plane Anchoring Function, SAF, between a set of first access connections and a remote connection corresponding to a HandOver Remote Function, HORF, wherein: each first access connection corresponds to a HandOver Source Function, HOSF, in an HOSF set in a session and is associated with a target media stream; the HOSF set comprises at least one HOSF; and the HOSF corresponds to at least one first access connection;
by the SAF, establishing a second access connection between the SAF and each HandOver Destination Function, HODF, in an HODF set, and associating the second access connection with a media stream corresponding to the transferred media stream after the SAF receives a stream operation request, wherein the HODF set comprises at least one HODF and the HODF corresponds to at least one second access connection; and
by the SAF, performing a stream operation on the second access connection and processing continuity of the target media stream.

2. The method of claim 1, wherein the second access connection between the SAF and each HODF in the HODF set is:
(a) an existing session signaling connection between the HODF and the SAF; or
(b) a newly established session signaling connection between the HODF and the SAF.

3. The method of claim 2, wherein:
if the SAF determines that a stream operation destination indication in the received stream operation request is a session identifier and corresponds to an existing session signaling connection, this session signaling connection is preferred as the second access connection; or
if the SAF determines that the stream operation destination indication in the received stream operation request is a User Equipment, UE, identifier or a mode identifier on a UE and corresponds to an existing session signaling connection, this session signaling connection is preferred as the second access connection.

4. The method of claim 1, wherein the process of the SAF performing the stream operation on the second access connection and processing continuity of the target media stream comprises:
by the SAF, associating the second access connection in the second access connection set with the remote connection, exchanging signaling, and transferring the target media stream from the HOSF set to the HODF set.

5. The method of claim 1, wherein the process of the SAF performing the stream operation on the second access connection and processing continuity of the target media stream comprises:
by the SAF, controlling an association between the second access connection in the second access connection set and the remote connection, and copying the target media stream from the HOSF set to the HODF set.

6. The method of claim 5, wherein the process of the SAF controlling the association between the second access connection in the second access connection set and the remote connection and copying the target media stream from the HOSF set to the HODF set comprises:
by the SAF, adding a Bearer Anchoring Function User plane, BAF-U, entity to a user data bearer connection of a session between the HODF set and the HORF through working with a Bearer Anchoring Function Control plane, BAF-C, entity, and instructing the BAF-C to copy the target media stream from the HOSF set to the HODF set; and
by the BAF-C, requesting conference resources on the BAF-U after receiving a copying indication, connecting media bearers of all parties in a media interaction to the conference resources, and modifying a direction of transmitting media streams between the HODF set and the BAF-U to copy the target media stream.

7. The method of claim 1, wherein the stream operation request received by the SAF comprises:
a stream operation request received by the SAF from an HOSF, requesting to transfer or copy the target media stream associated with the first access connection corresponding to every HOSF in the HOSF set to the HODF set.

8. The method of claim 7, wherein trigger conditions for the HOSF to send the stream operation request comprise at least one of the following:
(a) the HOSF receives a user indication;
(b) the HOSF detects that strength of a radio signal meets a preset threshold;
(c) the HOSF detects that Quality of Service, QoS, of the media stream meets a preset threshold;
(d) the HOSF detects a User Equipment, UE, which is more appropriate for processing the media stream; and
(e) the HOSF detects that current time meets a preset value.

9. The method of claim 7, wherein the stream operation request comprises at least one of the following items:
(a) a stream operation indication: indicates a media stream transfer or copying operation;
(b) an identifier of a target media stream's component: designed for the SAF to locate a component of the target media stream associated with an anchored first access connection; and
(c) a destination indication: includes a user identifier, a User Equipment, UE, identifier, or an identifier of an access mode of a UE.

10. The method of claim 9, wherein:
information in the stream operation request is obtained by the HOSF from session information stored by the HOSF or from user input.

11. The method of claim 7, wherein the stream operation request may be routed to the SAF in one of the following modes:
(a) if the HOSF sends the stream operation request on the first access connection, the SAF serving as a signaling anchor receives the stream operation request from this connection; or
(b) if the HOSF sends the stream operation request that carries the SAF address outside the first access connection, the stream operation request is routed to the SAF according to the SAF address; or
(c) the HOSF sends the stream operation request to the HODF, the HODF sends the stream operation request to the SAF, and the stream operation request is routed to the SAF; or
(d) the HOSF sends the stream operation request outside the first access connection, and the stream operation request is triggered through initial Filter Criteria, iFC, to the SAF; or
(e) if a source network of the HOSF is a Circuit Switched, CS, network, the HOSF uses CS signaling outside a call to send the stream operation request to a CS agent entity; the agent entity converts the request, and transmits the request to the SAF through a session of the first access connection; the stream operation request carries identifier information associated with the first access connection so that the CS agent entity can locate the first access connection.

12. The method of claim 1, wherein the stream operation request received by the SAF comprises:
a stream operation request received from an HODF, requesting to transfer or copy the target media stream associated with the first access connection corresponding to every HOSF in the HOSF set to the HODF set.

13. The method of claim 12, wherein trigger conditions for the HODF to send the stream operation request comprise at least one of the following:
(a) the HODF receives a user indication;
(b) the HODF detects that strength of a radio signal meets a preset threshold;
(c) the HODF detects that current time meets a preset value; and
(d) the HODF receives a stream operation indication sent by the HOSF or a third-party entity.

14. The method of claim 12, wherein the stream operation request comprises at least one of the following items:
(a) a stream operation indication: indicates a media stream transfer or copying operation;
(b) an identifier of a target media stream's component: designed for the SAF to locate a component of the target media stream associated with an anchored first access connection; and
(c) a destination indication: includes a user identifier, a User Equipment, UE, identifier, or an identifier of an access mode of a UE.

15. The method of claim 14, wherein the stream operation request further comprises the following item:
(f) a stream operation initiator indication: indicates a source initiator of the stream operation request to the SAF.

16. The method of claim 14 or claim 15, wherein information in the stream operation request may be obtained in one of the following modes:
(a) if the HODF and the HOSF are located in different UEs and support a Session Initiation Protocol, SIP, the HODF obtains, before the stream operation, the information in the stream operation request by subscribing to session events of the HOSF; or
(b) if the HODF and the HOSF are located on different UEs and do not support SIP, the HODF obtains, before the stream operation, the information in the stream operation request from the SAF through a Circuit Switched, CS, network protocol; or
(c) if the HODF and the HOSF are located on the same UE, the HODF obtains the information in the stream operation request through an internal interface.

17. The method of claim 12, wherein the stream operation request may be routed to the SAF in one of the following modes:
(a) if the HODF sends, before the stream operation, the stream operation request on an existing session signaling connection between the HODF and the SAF, the SAF serving as a signaling anchor receives the stream operation request from this connection; or
(b) if the HODF establishes a new session signaling connection with the SAF and uses the connection as a second access connection, a request for establishing the session signaling connection serves as the stream operation request, and this request carries information required for the stream operation and carries an address of the SAF, and therefore, the stream operation request is routed to the SAF according to the address of the SAF, and the stream operation request is routed to the SAF; or
(c) if a destination network of the HODF is a Circuit Switched, CS, network, a call setup message of a CS domain serves as the stream operation request, the stream operation request carries information required for the stream operation, and a called number of a call is directed to an address routable to the SAF; or
(d) if the HODF establishes a new session with the SAF and uses the session as the second access connection, the session connection setup request carries the information required for the stream operation, and the stream operation request is triggered to the SAF through initial Filter Criteria, iFC.

18. The method of claim 1, wherein the stream operation request received by the SAF is:
a stream operation request received from a third-party entity, requesting to transfer or copy the target media stream associated with the first access connection corresponding to every HOSF in the HOSF set to the HODF set.

19. The method of claim 18, wherein trigger conditions for the third-party entity to send the stream operation request comprise at least one of the following:
(a) an indication is received from a third-party User Equipment, UE;
(b) the third-party UE detects that time meets a preset value; and
(c) a third-party entity HandOver Control Entity, HOCF, at a network side detects that a network load state reaches a threshold.

20. The method of claim 18, wherein the stream operation request comprises at least one of the following items:
(a) a stream operation indication: indicates a media stream transfer or copying operation;
(b) an identifier of a target media stream's component: designed for the SAF to locate a component of the target media stream associated with the anchored first access connection;
(c) a destination indication: includes a user identifier, a UE identifier, or an identifier of a UE access mode; and
(d) a routing address directed to the SAF.

21. The method of claim 18, wherein information in the stream operation request may be obtained in one of the following modes:
(a) if the third-party entity is located in a User Equipment, UE, and supports a Session Initiation Protocol, SIP, the third-party entity obtains, before the stream operation, the information in the stream operation request by subscribing to session events of the HOSF;
(b) if the third-party entity HandOver Control Entity, HOCF, in the network and the SAF are located in different User Equipments, UEs, the HOCF obtains, before the stream operation, the information in the stream operation request by subscribing to the session events of the HOSF from the SAF;
(c) if the HOCF and the SAF are located on the same UE, the HOCF obtains the information in the stream operation request through an internal interface.

22. The method of claim 18, wherein the stream operation request may be routed to the SAF in one of the following modes:
(a) if the third-party entity sends the stream operation request that carries an address of the SAF, the stream operation request is routed to the SAF according to the address of the SAF;
(b) the third-party entity sends the stream operation request to the HODF, the HODF sends the stream operation request to the SAF, and the stream operation request is routed to the SAF; and
(c) the third-party entity sends the stream operation request to the HOSF; in the routing process, a Serving Call Session Control Function, S-CSCF, of the third-party entity uses initial Filter Criteria, iFC, to trigger the stream operation request to the SAF.

23. The method of claim 1, wherein the stream operation request received by the SAF comprises:
a stream operation request received from each HODF in the HODF set, requesting to transfer the target media stream associated with the first access connection corresponding to every HOSF in the HOSF set to the HODF set.

24. The method of claim 23, wherein the stream operation request comprises at least one of the following items:
(a) a destination indication: includes a user identifier, a User Equipment, UE, identifier, or an identifier of an access mode of a UE; and
(b) an association indication: indicates to the SAF that the request is associated with the stream operation request from other HODFs in the HODF set; after obtaining this indication, the SAF judges whether to wait for the associated HODF to send a stream operation request, and combines the received stream operation requests;
(c) a stream operation indication: indicates a media stream transfer or copying operation; and
(d) an identifier of the target media stream's component: designed for the SAF to locate a component of the target media stream associated with an anchored first access connection.

25. The method of claim 1, wherein the stream operation request received by the SAF comprises:
a stream operation request received from each HOSF in the HOSF set, requesting to transfer the target media stream associated with the first access connection corresponding to every HOSF in the HOSF set to the HODF set.

26. The method of claim 25, wherein the stream operation request comprises at least one of the following items:
(a) a stream operation indication: indicates a media stream transfer or copying operation;
(b) an identifier of a target media stream's component: designed for the SAF to locate a component of the target media stream associated with the anchored first access connection;
(c) a destination indication: includes a user identifier, a User Equipment, UE, identifier, or an identifier of an access mode of a UE; and
(d) an association indication: indicates to the SAF that the request is associated with the stream operation request from other HOSFs in the HOSF set; after obtaining this indication, the SAF judges whether to wait for the associated HOSF to send a stream operation request, and combines the received stream operation requests.

27. The method of claim 3, wherein the SAF exercises control to establish the second access connection in one of the following modes:
if the SAF receives the stream operation request from the HOSF or a third-party entity and determines that the second access connection needs to be established, the SAF sends a request for establishing the second access connection to every HODF in the HODF set; after receiving the request, the HODF interacts with the SAF to establish the second access connection; or
if the SAF receives the request for establishing the second access connection from the HODF and the request carries a stream operation indication, the SAF interacts with the HODF to establish the second access connection.

28. The method of claim 27, wherein the request for establishing the second access connection comprises:
an indication of not triggering Application Servers, Ass, except the SAF on the second access connection.

29. The method of claim 27, wherein:
if the HODF and the HOSF belong to different users and the HODF subscribes to a stream operation service, a second SAF is provided for the HODF in a home IP Multimedia Subsystem, IMS, network of the HODF.

30. The method of claim 29, further comprising:
exchanging stream operation policies configured by an HOSF user and an HODF user between the SAF and the second SAF in a signaling interaction process of the second access connection; and judging whether to allow the corresponding stream operation according to the policies when the SAF and the second SAF receive a subsequent stream operation request after receiving the stream operation policies.

31. The method of claim 29, wherein:
if transfer occurs after the media stream is already transferred to the HODF, the second SAF or the SAF controls the transfer.

32. The method of claim 29, further comprising:
storing transfer policies of a user in the SAF and the second SAF, and judging whether to allow transfer according to the stored policies when the SAF or the second SAF receives a stream transfer request.

33. The method of claim 1, wherein after the SAF receives the stream operation request, the method further comprises:
checking validity, and associating a media component corresponding to the target media stream with a second access connection between the SAF and each HODF in the HODF set after the check succeeds.

34. The method of claim 1, wherein after the SAF receives the stream operation request, the method further comprises:
checking validity, and, if the validity check fails, notifying the failure to an initiator of the stream operation request.

35. The method of claim 3, wherein:
if any of second access connections are established unsuccessfully among the second access connections between the SAF and each HODF in the HODF set, the SAF goes on with the media stream operation for the second access connections established successfully according to a network policy or according to a processing indication about partial operation failure in the stream operation request, or terminates the stream operation process for all second access connections.

36. The method of claim 23 or claim 25, wherein the SAF performs the stream operation on the second access connection in one of the following modes:
(a) the SAF negotiates media with the HORF on the remote connection after receiving Session Description Protocol, SDP, information of the HODF from all second access connections; or
(b) the SAF negotiates media with the HORF on the remote connection immediately after receiving SDP information of the HODF from any second access connection; or
(c) the SAF negotiates media with the HORF on the remote connection immediately after receiving SDP information of a specific number of HODFs from the second access connection.

37. The method of claim 1, wherein after completion of processing the target media stream, the SAF performs the following step: if the SAF determines that a media stream in addition to the target media stream exists in the media streams associated with the first access connection, the SAF releases the target media stream associated with the first access connection according to one of the following policies:
(a) the SAF negotiates media with the HOSF corresponding to the first access connection to release the associated target media stream; or
(b) the SAF releases the first access connection, and therefore, releases other associated media streams together with the target media stream.

38. The method of claim 1, wherein after completion of processing the target media stream, the SAF performs the following step:
if the SAF determines that no media stream except the target media stream exists in the media streams associated with the first access connection, the SAF releases the first access connection.

39. The method of claim 37, wherein:
the SAF obtains the policy from the stream operation request, or from SAF configuration information.

40. The method of claim 1, wherein:
the stream operation request further carries an indication about subscription to relevant events of the target media stream, and according to this indication, the SAF notifies the change to an initiator of the stream operation request upon a change of components of the target media stream.

41. A session control Signaling-plane Anchoring Function, SAF, comprising:
a triggering unit, configured to trigger the SAF after receiving a request for providing the SAF between a set of first access connections and a remote connection corresponding to a HandOver Remote Function, HORF, wherein each first access connection corresponds to a HandOver Source Function, HOSF, in an HOSF set in a session and is associated with a target media stream;
a receiving unit, configured to receive a stream operation request after the SAF is triggered;
an associating unit, configured to associate a media component corresponding to the target media stream with a second access connection between the SAF and each HandOver Destination Function, HODF, in an HODF set after receiving the stream operation request; and
a media stream processing unit, configured to perform a stream operation on the second access connection and process continuity of the target media stream.

42. The SAF of claim 41, wherein the media stream processing unit comprises:
a first association controlling unit, configured to control an association between the second access connection in the second access connection set and the remote connection; and
a transferring subunit, configured to transfer the target media stream from the HOSF set to the HODF set.

43. The SAF of claim 41, wherein the media stream processing unit comprises:
a second association controlling unit, configured to control an association between the second access connection in the second access connection set and the remote connection; and
a copying subunit, configured to copy the target media stream from the HOSF set to the HODF set.

44. The SAF of claim 41, further comprising:
a checking unit, located between the receiving unit and the associating unit and configured to: check validity of the stream operation request received by the receiving unit and notify the associating unit after success of the check.

45. The SAF of claim 41, further comprising:
a releasing unit, configured to release resources occupied by the target media stream at a HandOver Source Function, HOSF, after the media stream processing unit processes the continuity of the target media stream.

46. A system for processing continuity of media streams in a session, comprising:
a HandOver Source Function, HOSF, set, a HandOver Destination Function, HODF, set, a HandOver Remote Function, HORF, and a session control Signaling-plane Anchoring Function, SAF, according to any of claims 41-45.

47. The system of claim 46, wherein:
the HOSF set and the HODF set belong to different User Equipments, UEs, of the same user; or
belong to different access modes of the same UE; or
belong to UEs of different users or different access modes.

48. A User Equipment, UE, comprising:
a receiving unit, configured to receive a stream operation indication; and
an initiating unit, configured to send a stream operation request to a network according to the indication received by the receiving unit.

49. The UE of claim 48, wherein:
the stream operation indication received by the receiving unit comes from a user, or another UE or network element.

50. The UE of claim 48, wherein:
the UE is a HandOver Source Function, HOSF, a HandOver Destination Function, HODF, a third-party UE, or a third-party entity at a network.

51. A method for copying a media stream, comprising:
by a Bearer Anchoring Function Control plane, BAF-C, working with a session control Signaling-plane Anchoring Function, SAF, to add a Bearer Anchoring Function User plane, BAF-U, to a user data bearer connection of a session between a HandOver Destination Function, HODF, set and a HandOver Remote Function, HORF;
receiving an indication of copying a target media stream from a HandOver Source Function, HOSF, set to the HODF set; and
requesting conference resources on the BAF-U, connecting media bearers of all parties in a media interaction to the conference resources, and modifying a direction of transmitting media streams between the HODF set and the BAF-U to copy the target media stream.

52. A system for copying a media stream, comprising a session control Signaling-plane Anchoring Function, SAF, a HandOver Source Function, HOSF, set, a HandOver Destination Function, HODF, set, a HandOver Remote Function, HORF, a Bearer Anchoring Function Control plane, BAF-C, and a Bearer Anchoring Function User plane, BAF-U, wherein:
the SAF works with the BAF-C to add the BAF-U to a user data bearer connection of a session between the HODF set and the HORF;
the SAF is configured to instruct the BAF-C to copy a target media stream from the HOSF set to the HODF set; and
the BAF-C is configured to: request conference resources on the BAF-U after receiving a copying indication, connect media bearers of all parties in a media interaction to the conference resources, and modify a direction of transmitting media streams between the HODF set and the BAF-U to copy the target media stream.
